# EUROPÄISCHE PATENTSCHRIFT

(11) **EP 3 420 539 B1**
(45) Veröffentlichungstag und Bekanntmachung des Hinweises auf die Patenterteilung: **27.09.2023**
(21) Anmeldenummer: 17714633.9
(22) Anmeldetag: 16.02.2017
(51) Int. Cl.: F41G 3/26, G09B 29/00, G06T 19/00, G09B 9/00, G09B 9/05

(54) **VERFAHREN ZUM BETRIEB EINER ANZEIGEVORRICHTUNG UND SYSTEM ZUR ANZEIGE VON REALEN BILDINHALTEN EINER REALUMGEBUNG ÜBERLAGERTEN VIRTUELLEN BILDINHALTEN**
METHOD FOR OPERATING A DISPLAY DEVICE AND SYSTEM FOR DISPLAYING ACTUAL IMAGE CONTENTS OF AN ACTUAL ENVIRONMENT OVERLAYED WITH VIRTUAL IMAGE CONTENTS
PROCÉDÉ DE FONCTIONNEMENT D'UN DISPOSITIF D'AFFICHAGE ET SYSTÈME D'AFFICHAGE DE CONTENUS D'IMAGE VIRTUELS SUPERPOSÉS À DES CONTENUS D'IMAGE RÉELS D'UN ENVIRONNEMENT RÉEL

(30) Priorität: 22.02.2016 DE 102016103056
(43) Veröffentlichungstag der Anmeldung: 02.01.2019
(73) Patentinhaber: Krauss-Maffei Wegmann GmbH & Co. KG, 80997 München (DE)
(72) Erfinder: HAUBNER, Michael, 80997 München (DE); PABST, Manuel, 80997 München (DE)
(74) Vertreter: Feder Walter Ebert
(86) Internationale Anmeldenummer: PCT/DE2017/100118
(87) Internationale Veröffentlichungsnummer: WO 2017/144049

(56) Entgegenhaltungen:
- DE-A1-102014 008 152
- US-A1- 2012 115 598
- David E. Breen ET AL: "Interactive Occlusion and Collision of Real and Virtual Objects in Augmented Reality", Technical report ECRC-95-02, 1. Januar 1995 (1995-01-01), XP055048041, DOI: 10.1.1.38.113 Gefunden im Internet: URL:http://citeseerx.ist.psu.edu/viewdoc/d ownload?doi=10.1.1.38.113&rep=rep1&type=pd f [gefunden am 2012-12-17]
- Amir H Behzadan ET AL: "ARVISCOPE Georeferenced Visualization of Dynamic Construction Processes in Three-Dimensional Outdoor Augmented Reality Doctoral Committee", , 31 December 2008 (2008-12-31), XP055740533, Retrieved from the Internet: URL:https://deepblue.lib.umich.edu/bitstre am/handle/2027.42/60761/abehzada_1.pdf?seq uence=1&isAllowed=y [retrieved on 2020-10-15]

## Beschreibung

Die vorliegende Erfindung betrifft ein Verfahren zum Betrieb einer Anzeigevorrichtung sowie ein System zur Anzeige von realen Bildinhalten einer Realumgebung überlagerten virtuellen Bildinhalten.

Bei verschiedenen Berufen und Tätigkeiten besteht der grundlegende Wunsch, einzelne Handlungen, Tätigkeiten oder Abläufe und deren Abwandlungen zu trainieren oder zu üben, um in einem entsprechenden Ernstfall möglichst optimal handeln und/oder reagieren zu können. Zu den genannten Berufsgruppen zählen beispielsweise jedoch keinesfalls abschließend Sicherheitsbehörden, wie beispielsweise Polizei oder Militär.

Dabei bestehen grundsätzlich zwei unterschiedliche Ansätze zur Durchführung der Übung oder des Trainings der oben genannten Tätigkeiten oder Abläufe. Der klassische Ansatz sieht dabei vor, dass in einer realen Trainings- oder Übungsumgebung, also in einer Realumgebung, ein entsprechendes Szenario der zu trainierenden oder zu übenden Tätigkeit so realitätsnah wie möglich beispielsweise unter Verwendung von Übungsfahrzeugen, Statisten oder dergleichen vorbereitet und in Szene gesetzt wird, welches das zu schulende Personal oder die trainierenden Personen im Anschluss durchlaufen oder zu absolvieren haben. Der Vorteil dieses Ansatzes liegt darin, dass ein verhältnismäßig großes Maß an Realitätsnähe erreicht werden kann. Der Nachteil an diesem Trainings- oder Übungsansatz besteht jedoch darin, dass zur Vorbereitung und Durchführung des Szenarios und der darin ausgeführten Übung oder des darin stattfindenden Trainings ein hoher Aufwand betrieben werden muss.

Im militärischen Bereich sind entsprechende Übungen oder Manöver, insbesondere jedoch keinesfalls ausschließlich, wenn scharfe Munition verwendet wird oder verwendet werden soll und ggf. Luftfahrzeuge oder Artillerieeinheiten beteiligt sind, besonders aufwändig und kostenintensiv in Vorbereitung, Durchführung und Nachbereitung. Zudem besteht ein weiterer Nachteil dieses Ansatzes darin, dass die vorbereiteten und durchgeführten Szenarien relativ statisch oder unflexibel sind, so dass eine Abwandlung eines Szenarios nur in einem gewissen Rahmen möglich ist.

Der zweite, modernere Grundansatz zur Durchführung derartiger Übungen und Trainings von Tätigkeiten, Abläufen oder Handlungen besteht in der Simulation des Szenarios und einer Einbettung des zu schuldenden oder zu trainierenden Personals in die Simulation zu einem gewissen, je nach Art der Simulation unterschiedlich ausgestalteten, Grad. Der Vorteil einer Simulation der durchzuführenden Tätigkeit besteht darin, dass die Umgebung, in der die Tätigkeit geübt oder trainiert werden soll und/oder das Szenario der Übung oder des Trainings sehr variabel gestaltet werden kann. Beispielsweise existieren für die Ausbildung und das Training von militärischem Personal bereits seit einigen Jahren sogenannten "Schießkinos", in denen ein Schütze mit einer präparierten und angepassten Waffe Ziele bekämpft, die auf eine Leinwand projiziert werden, auf der neben den Zielen auch eine entsprechend simulierte und ebenfalls projizierte Umgebungen der Ziele dargestellt wird. Dieser Ansatz hat jedoch den Nachteil, dass die Simulation trotz einer gewissen Einbettung des Benutzers oder der zu trainierenden Person ein hohes Maß an Künstlichkeit oder mangelnde Realitätsnähe aufweist und damit das Training oder die Schulung, insbesondere hinsichtlich der physischen und psychischen Belastungen des Benutzers nicht an ein Training oder eine Übung in eine realen Umgebung heranreicht. Das Dokument "ARVISCOPE Georeferenced Visualization of Dynamic Construction Processes in Three-Dimensional Outdoor Augmented Reality" von Amir H. Behzadan (The University of Michigan, 2008) offenbart ein Verfahren zur Kombination einer Darstellung einer Realumgebung mit einer Darstellung virtueller Objekte.

Die **Aufgabe** der vorliegenden Erfindung liegt dementsprechend darin, ein Verfahren zum Betrieb einer Anzeigevorrichtung sowie ein System zur Anzeige von realen Bildinhalten einer Realumgebung überlagerten virtuellen Bildinhalten anzugeben, welches die oben genannten Ansätze vereinigt und dabei unter Beibehaltung der jeweiligen Vorteile die jeweiligen Nachteile überwindet.

Diese Aufgabe wird bei einem Verfahren der eingangs genannten Art dadurch **gelöst**, dass die Anzeigevorrichtung ein im Sichtfeld des Benutzers angeordnetes Anzeigeelement zur Anzeige von virtuellen Bildinhalten die realen Bildinhalten überlagert, anzeigt werden, aufweist und die folgenden Verfahrensschritte umfasst:
Zunächst erfolgt die Bestimmung einer Position und einer Blickrichtung des Benutzers in eine Realumgebung. Die Realumgebung kann dabei jede real existierende Umgebung sein. Beispielsweise kann die Realumgebung ein Wald oder ein Feld sein. Gleichermaßen kann die Realumgebung auch ein Gebiet, wie beispielsweise ein Truppenübungsplatz sein.

In einem weiteren Verfahrensschritt erfolgt das Platzieren von zumindest einem virtuellen Objekt an einer Objektposition in einer die Realumgebung georeferenziert abbildenden, computergenerierten, insbesondere geospezifischen Simulationsumgebung. Die Simulationsumgebung stellt eine datentechnische, insbesondere digitale Abbildung der jeweiligen Realumgebung dar. Dadurch, dass die Simulationsumgebung eine geospezifische Abbildung der Realumgebung ist, wird ein hohes Maß an Übereinstimmung zwischen der Simulationsumgebung und der Realumgebung realisiert. Die Georeferenzierung der Simulationsumgebung erlaubt zudem eine Zuordnung von Positionen in der Realumgebung zu entsprechenden Positionen in der Simulationsumgebung.

Darüber hinaus werden im Rahmen des erfindungsgemäßen Verfahrens eine virtuelle Position und eine virtuelle Blickrichtung in der Simulationsumgebung in der georeferenzierte Simulationsumgebung durch eine Übertragung der bestimmten Position und Blickrichtung des Benutzers in der Realumgebung bestimmt.

Im Anschluss daran wird eine Berechnung eines virtuellen Bildinhalts als der von der virtuellen Position und aus der virtuellen Blickrichtung sichtbare Teil des virtuellen Objekts in der Simulationsumgebung berechnet. Darüber hinaus wird eine Berechnung einer Einblendungsposition des virtuellen Bildinhalts auf dem Anzeigeelement der Anzeigevorrichtung anhand der Objektposition und der virtuellen Position und Blickrichtung des Benutzers in der Simulationsumgebung ausgeführt. Abschließend erfolgt die Anzeige von zumindest einem virtuellen Bildinhalt auf dem Anzeigeelement in Abhängigkeit der berechneten Einblendungsposition.

Der erfinderische Grundgedanke der vorliegenden Erfindung besteht u. a. darin, dass zusätzlich zu der Realumgebung, in der sich der Benutzer aufhält und/oder bewegt und das Training, Manöver oder Übung absolviert, ein virtuelles, möglichst genaues Duplikat oder Abbild der Realumgebung in Form der Simulationsumgebung vorliegt und zur Generierung und zur Anzeige von virtuellen Bildinhalten, die mit einer entsprechenden Anzeigevorrichtung realen Bildinhalten der Realumgebung überlagert angezeigt werden, verwendet wird. Vereinfacht ausgedrückt dient die Simulationsumgebung als für den Benutzer im Endeffekt nicht sichtbare Kulisse zur Erzeugung virtueller Bildinhalte, die dem Benutzer so zur Anzeige gebracht werden, dass sie mit realen Bildinhalten der Realumgebung überlagert werden.

Dabei erfolgt im Rahmen des Verfahrens ein entsprechender, ggf. mehrfacher Wechsel zwischen der Realumgebung und der Simulationsumgebung, um eine möglichst realitätsgetreue, kombinierte oder überlagerte Anzeige von virtuellen Bildinhalten und realen Bildinhalten für den Benutzer zu ermöglichen. Dies bedeutet, wie bereits angedeutet, dass die Simulationsumgebung bei der Erzeugung, Positionierung und Anzeige der virtuellen Bildinhalte als eine Art unsichtbare virtuelle Kulisse über die Realumgebung oder vielmehr deckungsgleich auf die Realumgebung aufgetragen oder gezogen wird, um aus einem virtuellen Objekt einen realistischen virtuellen Bildinhalt, insbesondere einen aus der Position und unter der Blickrichtung des Benutzers in der Realumgebung sichtbaren Teil eines virtuellen Objektes zu erzeugen und anzuzeigen.

Insbesondere um die Sichtbarkeit eines Teils des virtuellen Objekts aus der virtuellen oder realen Position und unter der virtuellen oder realen Blickrichtung des Benutzers bestimmen zu können, ist es dabei besonders vorteilhaft, wenn die die Realumgebung georeferenziert abbildende Simulationsumgebung eine hochauflösende detailgetreue 2,5- oder dreidimensionale Abbildung der Realumgebung aufweist. Hinsichtlich der Erzeugung von derartigen Simulationsumgebungen wird auf die Patentanmeldung DE 10 2015 120 999.3 verwiesen.

Bei den virtuellen Objekten kann es sich beispielsweise um dreidimensionale Modelle von Gegenständen wie beispielsweise Fahrzeugen und/oder Flugzeugen handeln. Die virtuellen Objekte können jedoch auch animierte dreidimensionale Personen umfassen. Die virtuellen Objekte, die im Rahmen des Verfahrens zum Einsatz kommen, können in einer entsprechenden Datenbank als digitale 2,5- oder dreidimensionale Modelle gespeichert sein.

Solche Objekte können lagerichtig, ggf. unter Einbeziehung eines physikalischen Modells in der Simulationsumgebung platziert oder in die Simulationsumgebung eingebracht werden. Die Einbringung kann dabei rein datentechnisch erfolgen, ohne dass eine Anzeige oder Visualisierung erfolgt. Im Beispiel eines Fahrzeuges kann dies dazu führen, dass das Fahrzeug mit seinen Rädern oder Ketten auf der Oberfläche der Simulationsumgebung platziert wird, wobei ggf. noch Prüfungsmechanismen abgearbeitet werden, ob das virtuelle Objekt, in diesem Fall das Fahrzeug, an dem gegebenen Punkt der Simulationsumgebung, insbesondere auf deren Oberfläche einen sicheren Stand hat, also beispielsweise ob alle vier Räder auf der Oberfläche der Simulationsumgebung zur Anlage kommen können.

Um die Vorzüge der als Untergrund oder Kulisse zur Anordnung der virtuellen Objekte und Ableitung der virtuellen Bildinhalte dienenden Simulationsumgebung bestmöglich auszunutzen, ist es einerseits erforderlich, dass die Simulationsumgebung die Realumgebung möglichst detailgetreu und hochauflösend abbildet. Darüber hinaus ist es jedoch auch besonders wichtig, dass die Simulationsumgebung und die Realumgebung in eine möglichst deckungsgleiche Übereinstimmung gebracht werden können. Dies bedeutet mit anderen Worten, dass es besonders wichtig ist, dass ein Bezugssystem für Positionen in der Realumgebung sowie eine Bezugssystem für Positionen in der Simulationsumgebung und eine entsprechende Transformation, die möglichst eindeutig und genau ist, zur Übertragung von Positionen und/ oder Richtungen aus der Realumgebung in die Simulationsumgebung und umgekehrt vorliegt. Im Rahmen dieser Beschreibung können Richtungen auch als Vektoren verstanden werden.

Eine solche Transformierbarkeit zwischen Positionen und Richtungen wird dadurch erreicht, dass die Simulationsumgebung die Realumgebung georeferenziert abbildet. Dies bedeutet, dass jeder Position, beispielsweise drei Ortskoordinaten einer GPS-Position in der Realumgebung, eine entsprechende Position in der Simulationsumgebung zugeordnet wird. Gleiches gilt entsprechend für Richtungen.

Dadurch wird ermöglicht, dass die in dem ersten Verfahrensschritt des erfindungsgemäßen Verfahrens festgestellte Position und Blickrichtung des Benutzers in der Realumgebung in einem späteren Verfahrensschritt in eine virtuelle Position und Blickrichtung in der Simulationsumgebung übertragen werden kann.

Wie oben bereits beschrieben werden zudem in dem Verfahren virtuelle Objekte, insbesondere virtuelle dreidimensionale Objekte in die Simulationsumgebung an einer Objektposition eingefügt oder platziert. Durch die oben bereits beschriebene lagerichtige Platzierung, ggf. unter Verwendung eines physikalischen Modells, wird dabei sichergestellt, dass die virtuellen Objekte an der jeweiligen Objektposition eine realitätsnahe oder realitätsgetreue Ausrichtung gegenüber der Simulationsumgebung aufweisen. Durch die Wirkung der Simulationsumgebung als unsichtbarer virtueller Hintergrund für die virtuellen Objekte und Bildinhalte wird die realitätsgetreue Ausrichtung der virtuellen Objekte und Bildinhalte im Rahmen des Verfahrens in die Realumgebung übertragen und eine realitätsnahe überlagerte Anzeige der virtuellen Bildinhalte ermöglicht. Beispielsweise wird dadurch sichergestellt, dass ein virtuelles Objekt in Form eines Fahrzeuges so in der Simulationsumgebung angeordnet wird, dass an der Objektposition bzw. im Umkreis der Objektposition die vier oder mehr Räder des Fahrzeuges die Oberfläche der Simulationsumgebung berühren oder tangieren.

Durch die Übertragung der Position und Blickrichtung des Benutzers in die Simulationsumgebung und die lagerichtige Platzierung der virtuellen Objekte an der Objektposition in der Simulationsumgebung kann im Anschluss daran im Rahmen eines weiteren Verfahrensschritts der Teil des virtuellen Objekts berechnet werden, der ausgehend von der virtuellen Position und unter der virtuellen Blickrichtung des Benutzers für den Benutzer sichtbar ist oder sichtbar wäre, wenn er sich in der Simulationsumgebung aufhielte.

Dieser Teil des virtuellen Objekts wird im Rahmen der vorliegenden Beschreibung als virtueller Bildinhalt betitelt. Dabei ist hervorzuheben, dass bei einer Veränderung der Objektposition und einer damit ggf. einhergehenden Veränderung der Objektausrichtung in der Simulationsumgebung sowie bei einer Änderung der reellen Position und/oder Blickrichtung des Benutzers und einer entsprechenden Änderung der virtuellen Position und der virtuellen Blickrichtung der für ein und dasselbe virtuelle Objekt resultierende virtuelle Bildinhalt als den Teil des virtuellen Objekts, der aus der jeweiligen virtuellen Position, unter der virtuellen Blickrichtung und mit Bezug auf die Position und Ausrichtung des virtuellen Objekts sichtbar ist, veränderlich oder variabel ist.

Beispielsweise wird der sichtbare Teil eines dreidimensionalen virtuellen Objekts, welches von einer erhöhten reellen oder virtuellen Position, wie beispielsweise einer Anhöhe in der Realumgebung und der Simulationsumgebung, betrachtet wird, verstärkt durch eine obere Oberfläche und ggf. eine oder mehrere Seitenflächen gebildet. Im Beispiel eines virtuellen Fahrzeugs als Beispiel eines virtuellen Objekts kann aus einer entsprechend erhöhten virtuellen Position und unter einer abwärts gerichteten Blickrichtung hauptsächlich eine Dachpartie und eine oder mehrere Seitenpartien des Fahrzeugs zumindest teilweise sichtbar sein. Diese Teile werden dementsprechend im Rahmen des Verfahrensschritts zur Berechnung des virtuellen Bildinhalts bestimmt.

Durch die Berechnung des virtuellen Bildinhalts wird sichergestellt, dass der schließlich dem Benutzer auf dem Anzeigeelement der Anzeigevorrichtung zur Anzeige gebrachte virtuelle Bildinhalt bei der Überlagerung mit den realen Bildinhalten eine hochgradig realistisch anmutende Darstellung des jeweiligen virtuellen Objekts ermöglicht. Denn wie auch bei einem realen Objekt wird dem Benutzer immer nur der Teil des virtuellen Objekts als virtueller Bildinhalt zur Anzeige gebracht, den er aus der derzeitigen Position und unter der derzeitigen Blickrichtung bei einem realen Objekt wahrnehmen oder sehen würde, welches sich an einer der Objektposition entsprechenden Position der Realumgebung befände. Mit anderen Worten ausgedrückt bedeutet dies, dass durch die jeweilige Bestimmung des virtuellen Bildinhalts verhindert wird, dass der Benutzer einen Teil einer Dachpartie eines Fahrzeuges als Teil eines virtuellen Bildinhaltes eines virtuellen Fahrzeuges auf dem Anzeigeelement angezeigt wird, wenn sich die Position des Benutzers auf gleicher Höhe oder unterhalb der Position des Fahrzeugs als virtuelles Objekt befindet.

Wie bereits angedeutet ist neben der Bestimmung eines besonders realistisch anmutenden virtuellen Bildinhalts als jeweils sichtbarer Teil des virtuellen Objekts auch eine korrekte und präzise Anzeige des virtuellen Bildinhalts auf dem Anzeigeelement der Anzeigevorrichtung nötig, um für den Benutzer eine realistische Überlagerung von virtuellen Bildinhalten und realen Bildinhalten mittels der Anzeigevorrichtung zu ermöglichen. Dazu erfolgt in einem weiteren Verfahrensschritt des erfindungsgemäßen Verfahrens eine Berechnung einer Einbildungsposition des virtuellen Bildinhalts auf dem Anzeigeelements anhand der Objektposition sowie der virtuellen Position und der virtuellen Blickrichtung. Allgemein ausgedrückt bedeutet dies, dass wenn die Relation zwischen virtueller Position, virtueller Blickrichtung und Objektposition derart ist, dass sich das virtuelle Objekt zentral in einem aus der virtuellen Position und der virtuellen Blickrichtung resultierenden virtuellen Blickfelds des Benutzers befindet, die Einblendungsposition des virtuellen Bildinhalts so bestimmt wird, dass die Anzeige des virtuellen Bildinhalts auf dem Anzeigeelement so ist, dass auch in dem realen Blickfeld des Benutzers der den realen Bildinhalten zu überlagernde virtuelle Bildinhalt zentral in dem realen Blickfeld zur Anzeige kommt.

Dementsprechend sieht ein finaler Verfahrensschritt des vorgeschlagenen Verfahrens vor, dass eine Anzeige von zumindest einem virtuellen Bildinhalt auf dem Anzeigeelement unter Berücksichtigung der zuvor berechneten Einblendungsposition auf dem Anzeigeelement erfolgt.

Im Rahmen der Bestimmung des virtuellen Bildinhalts, insbesondere bei der Berücksichtigung zwischen der virtuellen Position und deren Beziehung zur virtuellen Objektposition besteht ein weiterer besonderer Vorteil bei der Verwendung einer zumindest 2,5-dimensionalen Simulationsumgebung darin, dass sehr präzise und zuverlässig die Verdeckung von Teilen des virtuellen Objekts aus der virtuellen Position und unter der virtuellen Blickrichtung durch andere Teile der Simulationsumgebung festgestellt und bei der Berechnung des virtuellen Bildinhalts berücksichtigt werden kann. Dies bedeutet, dass bei der Verwendung einer 2,5- oder dreidimensionalen Simulationsumgebung schnell und einfach festgestellt werden kann, ob ein virtuelles Objekt wie beispielsweise ein virtuelles Fahrzeug von Teilen der Simulationsumgebung wie beispielsweise einem in der Simulationsumgebung befindlichen Gebäude, aus der virtuellen Position und unter der virtuellen Blickrichtung teilweise oder ganz verdeckt wird. In Abhängigkeit einer entsprechenden Abdeckung kann entsprechend der sichtbare Teil des virtuellen Objekts, also der virtuelle Bildinhalt angepasst, also zugeschnitten oder im Fall einer vollständigen Verdeckung, vollständig ignoriert werden.

Gemäß einer ersten vorteilhaften Ausgestaltung des vorgeschlagenen Verfahrens ist vorgesehen, dass anhand der Relativanordnung zwischen der Objektposition und der virtuellen Position und der virtuellen Blickrichtung in der Simulationsumgebung die Größenskalierung des virtuellen Bildinhalts bestimmt wird. Dies bedeutet, dass ein virtuelles Objekt, welches sich auf einer von der virtuellen Position weit entfernten Objektposition befindet, zu einem entsprechend kleinen virtuellen Bildinhalt zur Anzeige auf dem Anzeigeelement führt, verglichen mit einem identischen virtuellen Objekt, welches sich auf einer Objektposition in der Simulationsumgebung befindet, die in unmittelbarer Nähe der virtuellen Position des Benutzers liegt. Auch dadurch wird sichergestellt, dass die letztlich für den Benutzer wahrnehmbaren virtuellen Bildinhalte sehr realistisch anmuten, da deren Wahrnehmung der Wahrnehmung von realen Objekten in der Realumgebung entspricht, die bei einer entsprechend großen Entfernung von der realen Position ebenfalls als entsprechend klein wahrgenommen werden im Vergleich zu einem geringen Abstand zwischen Position des realen Objekts und der realen Position.

Um eine möglichst realistische Überlagerung von virtuellen Bildinhalten und realen Bildinhalten, mittels der Anzeigevorrichtung zu ermöglichen, ist es zudem von besonderer Wichtigkeit, dass die virtuellen Objekte und die daraus abgeleiteten virtuellen Bildinhalte nur an solchen Objektpositionen in der Simulationsumgebung und daraus resultierenden Einblendungsposition auf dem Anzeigeelement platziert werden, an denen ein entsprechendes reales Objekt in der Realumgebung ebenfalls angeordnet sein könnte oder sich befinden könnte. Im Beispiel eines virtuellen Objekts in Form eines Fahrzeuges bedeutet dies, dass es vom Benutzer als äußerst unrealistisch wahrgenommen werden würde, wenn das Fahrzeug auf einem Gebäudedach oder in einer Baumkrone angeordnet und der entsprechende virtuelle Bildinhalt dem Benutzer zur Anzeige gebracht werden würde.

Um derartige Fehlpositionierungen der virtuellen Objekte in der Simulationsumgebung zu verhindern, wird eine weitere besonders vorteilhafte Ausführungsform des Verfahrens vorgeschlagen. Gemäß dieser Ausführungsform ist vorgesehen, dass die Objektposition durch eine Klassifizierung der Simulationsumgebung beschränkt wird, die zumindest eine Unterscheidung zwischen einem computergenerierten, das reale Gelände abbildenden Geländemodell und reale Objekte abbildenden Objekten vorsieht. Dementsprechend kann vorgesehen sein, dass jeder Teil der Oberfläche der Simulationsumgebung, der damit grundsätzlich als Objektposition zur Positionierung eines virtuellen Objekts in Frage kommt, einen Klassifizierungswert aufweist oder einem Klassifizierungswert zugeordnet ist, der zumindest eine Unterscheidung zwischen Gelände und im Gelände befindlichen Objekten erlaubt.

Die Beschränkung der Wahl der Objektposition in Abhängigkeit einer solchen Klassifizierung kann beispielsweise derart ausfallen, dass die Objektposition nur so gewählt werden kann, dass die Position selber auf einem Teil der Oberfläche der Simulationsumgebung gewählt wird, die als Gelände klassifiziert ist, und dass ggf. darüber hinaus auch in Abhängigkeit der Ausdehnung des zu platzierenden oder zu positionierenden virtuellen Objekts sichergestellt wird, dass die Ausmaße des virtuellen Objekts, insbesondere der bodenseitige Umfang des virtuellen Objekts insgesamt nur mit Teilen der Oberfläche der Simulationsumgebung in Berührung kommt oder an diesen zur Anlage kommt, die ebenfalls eine Klassifizierung als Gelände aufweisen.

Die Klassifizierung zur Unterscheidung zwischen Gelände und Objekten ist dabei jedoch die rudimentärste Ausgestaltung zur Sicherstellung, dass die virtuellen Objekte und die daraus abgeleiteten virtuellen Bildinhalte an realistischen Positionen positioniert und entsprechend angezeigt werden. Darüber hinaus kann noch eine Vielzahl von weiteren Klassifizierungen, insbesondere Unterklassifizierungen zur Beschreibung der Simulationsumgebung vorgesehen sein, die ebenfalls zu einer Beschränkung der möglichen Objektposition der virtuellen Objekte führen. Beispielsweise kann vorgesehen sein, dass auch als Gelände klassifizierte Teile oder Oberflächen der Simulationsumgebung durch eine Unterklassifikation hinsichtlich der Eignung als Objektposition beschränkt werden. Dieses kann für Fahrzeuge oder ähnliche virtuelle Objekte beispielsweise für Steilhänge oder Flussläufe vorgesehen sein. Auch ist möglich, dass die Beschränkung in Abhängigkeit von unterschiedlichen Typen von virtuellen Objekten erfolgt. Dabei können entweder Klassifizierungslevel und eine jeweilige Abstufung der virtuellen Objekte zu einem entsprechenden Mindest- oder Höchstlevel vorgesehen sein. Alternativ kann jedoch auch eine matrixähnliche Zuordnung von unterschiedlichen virtuellen Objekte zu jeweils unterschiedlichen Klassifizierungsattributen der Simulationsumgebung vorgesehen sein, die individuell die Beschränkung der Objektposition für das jeweilige virtuelle Objekt bestimmt.

Um ein möglichst effektives und realitätsnahes Training des Benutzers anhand des vorgeschlagenen Verfahrens zu ermöglichen, ist es besonders wünschenswert, dass die virtuellen Objekte und die daraus abgeleiteten virtuellen Bildinhalte nicht statisch sind, sondern sich die virtuellen Objekte in der Simulationsumgebung bewegen, also ihre Objektposition ändern können und dementsprechend bewegte oder bewegliche Abbildungen der virtuellen Objekte in Form beweglicher und veränderlicher virtueller Bildinhalte für den Benutzer auf dem Anzeigeelement angezeigt werden.

Dementsprechend sieht eine weitere besonders vorteilhafte Ausführungsform des Verfahrens vor, dass zur Anzeige von zumindest einem bewegten und/oder veränderlichen virtuellen Bildinhalts das Verfahren, insbesondere mit zumindest einer sich ändernden Objektposition, fortlaufend wiederholt wird, wobei die Änderung der Objektposition zumindest durch eine Klassifizierung der Simulationsumgebung beschränkt wird, die zumindest eine Unterscheidung zwischen einem computergenerierten, das reale Gelände abbildenden Geländemodell und reale Objekte abbildenden, computergenerierten Objekten vorsieht. Dadurch wird realisiert, dass einerseits virtuelle Objekte eine Veränderung ihrer Objektposition in der Simulationsumgebung und eine dementsprechend bewegte Darstellung eines virtuellen Bildinhalts erreicht wird. Darüber hinaus wird jedoch auch sichergestellt, dass die von den virtuellen Objekten ausgeführten Bewegungen, nämlich die Änderungen der Objektposition nicht dazu führen, dass die virtuellen Objekte und die daraus abgeleiteten virtuellen Bildinhalte zu einer unrealistischen Positionierung der virtuellen Objekte in der Simulationsumgebung und einer daraus resultierenden unrealistischen Anzeige virtueller Bildinhalte in Überlagerung mit realen Bildinhalten führen, da die Klassifikation der Simulationsumgebung die Änderung der Objektposition beschränkt, so dass zumindest sichergestellt ist, dass sich die virtuellen Objekte ausschließlich in dem das reale Gelände abbildenden Geländemodell der Simulationsumgebung bewegen und nicht auf der Oberfläche von reale Objekte abbildenden computergenerierten Objekten befindlich sind oder dich dorthin verändern.

Ebenfalls kann es für den Übungs- oder Trainingszweck besonders vorteilhaft sein, wenn die virtuellen Objekte eine Form von künstlicher Intelligenz (AI, artificial intelligence) aufweisen. Im Bereich von Trainings und Übungszwecken aus dem Sicherheitsbereich oder dem militärischen Bereich kann es besonders wünschenswert sein, wenn die virtuellen Objekte als sogenannte computergenerierte Einheiten (CGF, computer generated forces) ausgestaltet sind. In diesem Fall kann es besonders vorteilhaft sein, wenn die virtuellen Objekte eine nicht vorprogrammierte oder zumindest nicht im Detail vorprogrammierte, zumindest teilweise selbstständige Änderung der Objektposition ausführen. Um jedoch die autonome oder teilautonome Objektänderung nicht zu weiteren Teilen rein zufälligen oder statistischen Prozessen zu unterwerfen, kann es besonders vorteilhaft sein, wenn die virtuellen Objekte ihre Positionsänderung in Abhängigkeit der Simulationsumgebung, insbesondere der Umgebung der aktuellen Objektposition in der Simulationsumgebung ausführen. Als Beispiel sei hier genannt, dass vorgesehen sein kann, dass virtuelle Objekte, die Fahrzeuge darstellen, ihre Objektposition bevorzugt oder ausschließlich entlang von Straßen oder Wegen ändern und somit ausschließlich oder bevorzugt dem Straßenverlauf oder dem Wegverlauf folgen.

Um eine derartige Änderung von Objektpositionen bzw. eine teilautonome Bewegung virtueller Objekte in der Simulationsumgebung zu ermöglichen, sieht eine weitere vorteilhafte Ausführungsform des vorgeschlagenen Verfahrens vor, dass zur Anzeige von einem bewegten virtuellen Bildinhalt das Verfahren mit zumindest einer sich ändernden Objektposition fortlaufend wiederholt wird, wobei die Objektposition unter Berücksichtigung eine Geländeklassifizierung des Geländemodells der Simulationsumgebung ausgeführt wird, wobei die Geländeklassifikation zumindest eine Unterscheidung zwischen unterschiedlichen Geländetypen und/oder Geländezuständen eines computergenerierten, das reale Gelände abbildenden Geländemodells vorsieht.

Anhand der Geländeklassifikation kann beispielsweise erreicht werden, dass sich Wasserfahrzeuge als virtuelle Objekte lediglich entlang von in der Simulationsumgebung als Wasserflächen gekennzeichneten Teilen des Geländemodells bewegen. Abgesehen von einer Einschränkung oder Beschränkung der Änderung der Objektposition durch eine oder mehrere Geländeklassen kann alternativ oder zusätzlich auch vorgesehen sein, dass die Änderungsrate der Objektposition in Abhängigkeit der Geländeklassifizierung bestimmt wird. Dies bedeutet, dass beispielsweise ein als Kettenfahrzeug programmiertes virtuelles Objekt auf einem als Straße oder Weg gekennzeichneten Teil des Geländemodells der Simulationsumgebung eine höhere Änderungsrate der Objektposition, also Geschwindigkeit, aufweisen kann, als in einem als Sumpf oder Morast klassifizierten Teil des Geländemodells der Simulationsumgebung.

Wie oben bereits mehrfach angedeutet, sieht eine besonders vorteilhafte Ausgestaltung des Verfahrens vor, dass die virtuellen Bildinhalte als zweidimensionale Projektionen von dreidimensionalen virtuellen Objekten erzeugt werden, wobei die Projektion zumindest anhand der Ausrichtung des virtuellen Objekts in der Simulationsumgebung erzeugt wird. Die Abhängigkeit der Projektion oder des aus der Projektion hervorgehenden virtuellen Bildinhalts von der Ausrichtung des virtuellen Objekts bedeutet auch, dass sich der dem Benutzer angezeigte virtuelle Bildinhalt auch dann ändern wird, wenn das entsprechende virtuelle Objekt in der Simulationsumgebung ohne eine Änderung der Objektposition lediglich eine Drehung um eine beispielsweise vertikal verlaufende Objektachse ausführt. Ein hierzu anschauliches Beispiel ist ebenfalls ein Kettenfahrzeug als virtuelles Objekt, da Kettenfahrzeuge auch in der Realität durchaus in der Lage sind, auf der Stelle zu drehen, also lediglich eine Rotation um eine vertikale Achse auszuführen. Bei einer derartigen Bewegung eines realen Kettenfahrzeugs sieht der Betrachter in der Realität ebenfalls einen sich stetig ändernden Teil der Fahrzeugoberfläche. Bei einer Erzeugung der virtuellen Bildinhalte als zweidimensionale Projektion dreidimensionaler virtueller Objekte unter Berücksichtigung der Ausrichtung des Objektes in der Simulationsumgebung, kann eben auch eine solche Rotation des Objekts, um eine oder mehrere Achsen sowohl für sich als auch in Kombination mit einer Änderung der Objektposition in Form von sehr realitätsnahen virtuellen Bildinhalten dem Benutzer zusammen oder überlagert mit realen Bildinhalten zur Anzeige gebracht werden.

Besonders vorteilhaft kann zudem vorgesehen sein, dass zur Anzeige von einem bewegten virtuellen Bildinhalt das Verfahren mit zumindest einer sich ändernden Ausrichtung des virtuellen Objekts fortlaufend wiederholt wird, wobei die zweidimensionale Projektion des virtuellen Objektes in Abhängigkeit der Veränderung der Relativanordnung zwischen virtueller Position, virtueller Blickrichtung, Objektposition und Ausrichtung des Objekts in der Simulationsumgebung erzeugt wird. Dadurch wird ermöglicht, dass für den Benutzer virtuelle Bildinhalte erzeugt und auf dem Anzeigeelement der Anzeigevorrichtung mit reellen Bildinhalten überlagert werden können, die virtuelle Objekte widerspiegeln oder reelle Objekte nachahmen, deren Position und Richtung sich verändern kann. Damit lassen sich sehr realitätsnah auch Bewegungen von realen Objekten wie beispielsweise Fahrzeugen anhand der virtuellen Bildinhalte nachbilden.

Wie auch bei den vorangehend beschriebenen Ausgestaltungen des Verfahrens, die zur Anzeige von veränderlichen virtuellen Bildinhalten dienen, kann vorgesehen sein, dass das Verfahren mit einer Frequenz von 30 Hz oder mehr ausgeführt wird, um die Bewegungen der virtuellen Bildinhalte möglichst realistisch für die Betrachtung erscheinen zu lassen. Besonders bevorzugt sind jedoch höhere Frequenzen der Bildwiederholungsrate der virtuellen Bildinhalte von 100 Hz oder mehr.

Es sei an dieser Stelle auch darauf hingewiesen, dass bewegte oder veränderliche virtuelle Bildinhalte nicht ausschließlich durch eine Veränderung der Objektposition des virtuellen Objektes in der Simulationsumgebung oder einer Veränderung der Ausrichtung des virtuellen Objekts in der Simulationsumgebung verursacht werden können. Gleichermaßen kann auch die Bewegung des Benutzers in der Realumgebung und eine daraus resultierende Verschiebung oder Verlegung der virtuellen Position zu einer Veränderung der Relativanordnung zwischen Benutzer und virtuellem Objekt führen, so dass auch zur Berücksichtigung solcher Positionsänderungen des Benutzers das Verfahren bevorzugt fortlaufend wiederholt wird.

Auch bereits eine Änderung der realen Blickrichtung ohne eine Veränderung der realen oder virtuellen Position des Benutzers kann zu einer Veränderung der Relativanordnung zwischen virtueller Position, virtueller Objektposition und virtueller Blickrichtung folgen, die zumindest eine Neuberechnung der Einblendungsposition des virtuellen Bildinhalts nötig macht. Dies bedeutet im Umkehrschluss, dass im Rahmen der vorliegenden Beschreibung auch virtuelle Bildinhalte, die sich in rein bildlicher der visueller Hinsicht nicht ändern, sich jedoch hinsichtlich der Einblendungsposition auf dem Anzeigeelement verändern, als bewegte virtuelle Bildinhalte zu verstehen sind.

Gemäß einer weiteren vorteilhaften Ausgestaltung des beschriebenen Verfahrens kann vorgesehen sein, dass die Simulationsumgebung durch die Auswertung von bei einem Überflug über oder einer Durchfahrt durch die Realumgebung gewonnenen Sensordaten, insbesondere Bildaufnehmen, erzeugt wird. Eine solche Erzeugung der Simulationsumgebung hat den Vorteil, dass die Simulationsumgebung innerhalb kurzer Zeit, also mit einer hohen Aktualität, ggf. unmittelbar vor der Durchführung des Trainings oder der Übung erfolgen kann, so dass eine besonders hohe Übereinstimmung zwischen der Simulationsumgebung und der Realumgebung gewährleistet ist. Dies wiederum führt dazu, dass es bei der Berechnung der virtuellen Bildinhalte, insbesondere hinsichtlich der Verdeckung von Teilen der virtuellen Objekte durch Teile der Simulationsumgebung, ausgehend von der realen oder virtuellen Position des Benutzers, nicht zu Diskrepanzen zwischen der Simulationsumgebung und der Realumgebung kommt.

Denn für den Fall, dass veraltete oder auf veralteten Sensordaten basierende Simulationsumgebungen für das hier beschriebene Verfahren verwendet werden, kann es zu der Situation kommen, dass in der aus den Sensordaten erzeugten Simulationsumgebungen noch Objekte, insbesondere Gebäude enthalten sind, die jedoch in Wirklichkeit, also in der aktuellen Realumgebung nicht mehr vorhanden sind. Dies wiederum hätte den Nachteil, dass bei der Berechnung der virtuellen Bildinhalte ein solches veraltetes und in der Simulationsumgebung noch enthaltenes Gebäude oder Objekt eine Verdeckung oder eine teilweise Überdeckung eines an einer virtuellen Objektposition befindlichen virtuellen Objekts von der virtuellen Position und unter der virtuellen Blickrichtung vermuten lässt, so dass eine entsprechende Anpassung, also ein entsprechendes Zuschneiden oder gar unterdrücken des virtuellen Bildinhalts die Folge wäre. Dadurch würde jedoch für den Benutzer der Anschein entstehen, dass das virtuelle Objekt von einem unsichtbaren und durchsichtigen Objekt verdeckt oder teilverdeckt werden würde, was zu einer überaus unrealistischen Wahrnehmung der überlagerten realen und virtuellen Bildinhalte führen würde.

Hinsichtlich der Einzelheiten der Erzeugung derartiger Simulationsumgebungen wird auf die bereits oben genannte deutsche Patentanmeldung DE 10 2015 120 999.3 verwiesen. Darüber hinaus wird die oben beschriebene Aufgabe bei einem System der eingangs genannten Art dadurch g e l ö s t, dass das System zumindest eine Speichereinheit umfasst, in der eine computergenerierte, die Realumgebung georeferenziert abbildende Simulationsumgebung sowie eine Objektdatenbank virtueller Objekte gespeichert ist, das System ferner eine Positions- und Blickrichtungsbestimmungseinheit aufweist, die zur Bestimmung der Position und der Blickrichtung des Benutzers in der Realumgebung eingerichtet ist, dass darüber hinaus von dem System eine erste Übermittlungseinheit zur Übermittlung der Position und Blickrichtung des Benutzers in der Realumgebung an eine Recheneinheit umfasst, wobei die Recheneinheit mit zumindest einer Speichereinheit verbunden ist und zur Platzierung von virtuellen Objekten der Objektdatenbank an einer Objektposition in der Simulationsumgebung zur Ableitung einer virtuellen Position sowie einer virtuellen Blickrichtung in der Simulationsumgebung aus der übermittelten realen Position und Blickrichtung, zur Berechnung eines virtuellen Bildinhalts, als von der virtuellen Position und unter der virtuellen Blickrichtung sichtbaren Teil des virtuellen Objekts in der Simulationsumgebung sowie zur Berechnung einer Einblendungsposition des virtuellen Bildinhalts auf dem Anzeigeelement anhand der Objektposition sowie der virtuellen Position und der virtuellen Blickrichtung eingerichtet ist und wobei die Recheneinheit ferner mit einer zweiten Übermittlungseinheit ausgestattet ist, die zur Übermittlung des virtuellen Bildinhalts und der Einblendungsposition des virtuellen Bildinhalts auf dem Anzeigeelement an die Anzeigevorrichtung eingerichtet ist.

Das erfindungsgemäße System umfasst also als ein zentrales Element eine Recheneinheit, die entsprechend auf die Speichereinheit oder die Speichereinheiten zugreifen kann, in denen die Simulationsumgebung sowie die virtuellen Objekte, also eine Objektdatenbank virtueller Objekte, gespeichert sind, an die des Weiteren die in der Realumgebung erfassten Daten betreffend die reale Position und die reale Blickrichtung des Benutzers und die nach einer Integration oder Transformation der Daten betreffend die reale Position und die reale Blickrichtung des Benutzers in die Simulationsumgebung sowie ein Platzieren sowie ggf. Verändern einer Objektposition und/oder Ausrichtung eines virtuellen Objekts in der Simulationsumgebung als Ausgangssignale die entsprechenden virtuellen Bildinhalte und den Bildinhalten zugeordnete Einblendungspositionen zur Anzeige auf dem Anzeigeelement der Anzeigevorrichtung erzeugt, welche anschließend mit der zweiten Übermittlungseinheit an die Anzeigevorrichtung übermittelt werden.

Bei dem vorgeschlagenen System können unterschiedlichste räumliche Anordnungen der jeweiligen Systemkomponenten realisiert werden, die für sich genommen jeweils besondere Vorteile haben.

In einer ersten Ausgestaltung des Verfahrens kann beispielsweise vorgesehen sein, dass alle Systemmerkmale, also alle Systemkomponenten in unmittelbarer Nähe zueinander angeordnet sind. Dies kann beispielsweise dadurch erreicht werden, dass die Speichereinheit oder die Speichereinheiten sowie die Recheneinheit in einen Helm integriert oder an einem Helm angebracht werden, an dem auch die Anzeigevorrichtung für den Benutzer angeordnet oder befestigt ist. Anstatt eines Helms kann hier auch ein anderes kopfbefestigbares Trägersystem zum Einsatz kommen. Dabei können die Übermittlungseinheiten durch einfache Kabelverbindungen realisiert werden. Ein Vorteil einer solchen Ausgestaltung liegt darin, dass durch die lokale Bündelung der Systemkomponenten und die entsprechende Ausgestaltung der Übermittlungseinheiten in Form von Kabelverbindungen eine besonders schnelle Übermittlung der Daten zwischen den einzelnen Komponenten des Systems ermöglicht wird, was wiederum zur Folge hat, dass das System mit geringsten Latenzzeiten betrieben werden kann.

Umgekehrt kann es jedoch auch wünschenswert sein, wenn verschiedene Benutzer zusammen trainiert werden oder eine Übung durchführen. In diesem Fall kann vorgesehen sein, dass die Recheneinheit sowie die Speichereinheit oder Speichereinheiten zentral an einem ersten Ort angeordnet sind und die Übermittlungseinheiten jeweils zweigeteilt ausführt sind, mit einem Teil am Ort der Recheneinheit und einem zweiten Teil in unmittelbarer Umgebung der Anzeigevorrichtung oder des Benutzers.

Die Positionsbestimmungseinheit ist bevorzugt in unmittelbarer Nähe des Benutzers angeordnet. Die Blickrichtungsbestimmungseinheit ist zwangsläufig so angeordnet und ausgeführt, dass sie Bewegungen des Kopfes des Benutzers sowie ggf. Augenbewegungen des Benutzers registrieren und ggf. verarbeiten kann. Die Positionsbestimmungseinheit kann beispielsweise durch eine GPS-Einheit, insbesondere durch eine DGPS-Einheit realisiert werden. Die Blickrichtungsbestimmungseinheit kann beispielsweise Beschleunigungssensoren und/oder sogenannte Augenverfolgungsvorrichtungen (eye-tracking-systems) aufweisen, wobei letztere ggf. in die Anzeigevorrichtung integriert sein können.

In einer weiteren Alternative hinsichtlich der räumlichen Aufteilung der Systemkomponenten können auch verschiedene Zwischenstufen realisiert werden, die insbesondere eine Mehrzahl von Recheneinheiten notwendig machen. So kann beispielsweise zusätzlich zu einer zentralen stationären Recheneinheit auch vorgesehen sein, dass die vom Benutzer mitgeführten oder in unmittelbarer Nähe zum Benutzer befindlichen Systemkomponenten ebenfalls eine Recheneinheit aufweisen, wobei die durch die jeweiligen Recheneinheiten auszuführende Rechenoperationen dahingehend optimiert sind, die Übertragung von Daten zwischen der zentralen Recheneinheit und den persönlichen oder benutzerseitigen Recheneinheiten zu minimieren oder zumindest zu beschleunigen.

Gemäß einer vorteilhaften Ausführungsform des Systems kann vorgesehen sein, dass die Recheneinheit einen Bewegungssimulator aufweist, der eine sich ändernde Objektposition virtueller Objekte in der Simulationsumgebung berechnet. Dadurch wird ermöglicht, dass die über die virtuellen Bildinhalte dem Benutzer zur Anzeige gebrachten Abbildungen virtueller Objekte ihre scheinbare Position in der Realumgebung verändern. Das bedeutet, dass mittels der virtuellen Bildinhalte sich bewegende virtuelle Objekte in die Realumgebung eingeblendet werden können, was über die überlagerte Anzeige von virtuellen und realen Bildinhalten mittels der Anzeigevorrichtung ermöglicht wird. Gleiches kann zusätzlich oder alternativ auch für die Ausrichtung der virtuellen Objekte in der Simulationsumgebung gelten.

In einer ebenfalls vorteilhaften Ausgestaltung des Systems ist zudem vorgesehen, dass die Speichereinheit eine Klassifizierung der Simulationsumgebung aufweist, die zumindest eine Unterscheidung zwischen einem computergenerierten, das reale Gelände abbildenden Geländemodells und reale Objekte abbildende computergenerierte Objekte vorsieht. Die Klassifizierung der Simulationsumgebung in Gelände und Objekte ermöglicht einerseits, dass die virtuellen Objekte nur im Gelände platziert werden, was zu einer realistischen oder realitätsnahen Einblendung von virtuellen Bildinhalten führt, damit beispielsweise verhindert werden kann, dass ein virtuelles Objekt, wie beispielsweise ein Fahrzeug, auf einem Gebäude platziert wird.

In einer weiteren vorteilhaften Ausführungsform des Systems ist vorgesehen, dass die Speichereinheit eine Geländeklassifizierung der Simulationsumgebung umfasst, wobei die Geländeklassifizierung zumindest eine Unterscheidung zwischen unterschiedlichen Geländetypen und/oder Geländezuständen eines computergenerierten, das reale Gelände abbildenden Geländemodells der Simulationsumgebung vorsieht. Eine Geländeklassifizierung kann dabei in unterschiedlicher Hinsicht von besonderem Wert oder Nutzen sein. Einerseits kann die Geländeklassifizierung bei der Positionierung virtueller Objekte, also bei der Bestimmung der Objektposition, zur Anwendung kommen. Darüber hinaus kann die Geländeklassifizierung auch zusammen mit dem Bewegungssimulator verwendet werden, d. h. bei der vom Bewegungssimulator ausgeführten Berechnung zur Veränderung der Objektposition virtueller Objekte in der Simulationsumgebung kann sowohl hinsichtlich der Änderungsrate der Objektposition als auch hinsichtlich der Zulässigkeit einer Objektposition die Geländeklassifikation der Speichereinheit berücksichtigt werden. Die Geländeklassifizierung kann ggf. zusammen mit einer als Teil der Objektdatenbank vorgesehenen Objektklassifizierung verwendet werden. Abgesehen davon kann jedoch auch allgemein eine Objektklassifizierung als Teil der Objektdatenbank vorgesehen sein, die die virtuellen Objekte in unterschiedliche Klassen und/oder Unterklassen unterteilt und den virtuellen Objekten entsprechende Eigenschaften wie beispielsweise maximale Geschwindigkeit zuordnet.

In einer weiteren vorteilhaften Ausgestaltung des Systems ist zudem vorgesehen, dass die Recheneinheit als eine einem Benutzer zugeordnete, insbesondere tragbare persönliche, Recheneinheit ausgestaltet ist.

Eine weitere besonders vorteilhafte Ausgestaltung des beschriebenen Systems sieht vor, dass das System eine Hauptrecheneinheit umfasst, die datentechnisch, insbesondere über zumindest eine Übertragungseinheit, mit zumindest einer Recheneinheit, insbesondere einer persönlichen Recheneinheit, verbunden ist.

Gemäß einer weiteren bevorzugten Ausgestaltung des Systems ist vorgesehen, dass die Speichereinheit und/oder die Recheneinheit als zentrale Speichereinheit und/oder als zentrale Recheneinheit ausgebildet ist/sind.

Um mit dem System ein Training bzw. eine Übung mit mehreren teilnehmenden Benutzern zu ermöglichen, sieht eine zusätzliche Ausprägung des Systems vor, dass eine Mehrzahl von Anzeigevorrichtungen, eine entsprechende Mehrzahl von Positions- und Blickrichtungsbestimmungseinheiten sowie eine entsprechende Mehrzahl von Übertragungseinheiten vom System umfasst sind, so dass für den jeweiligen Benutzer die reale Position sowie die reale Blickrichtung ermittelt und an eine Recheneinheit zur Transformation in eine virtuelle Position und virtuelle Blickrichtung übermittelt werden kann und umgekehrt jeder Benutzer entsprechende virtuelle Bildinhalte und Einblendungspositionen über eine Übertragungseinheit empfangen kann, so dass die virtuellen Bildinhalte auf der jeweiligen Anzeigevorrichtung des Benutzers angezeigt werden können.

Weiter kann besonders vorteilhaft vorgesehen sein, dass die Anzeigevorrichtung als kopfbefestigbare Anzeigevorrichtung, insbesondere als Durchsichtanzeigevorrichtung ausgestaltet ist Solche kopfbefestigbaren Anzeigevorrichtungen (head mounted displays) ermöglichen in besonders vorteilhafter Weise eine überlagerte Darstellung von virtuellen Bildinhalten und realen Bildinhalten. Beispielsweise kann auf einem ansonsten transparenten Anzeigeelement, welches im Sichtfeld des Benutzers angeordnet ist, ein virtueller Bildinhalt zur Anzeige gebracht werden, so dass der Benutzer in den Bereichen des Anzeigeelements, in denen keine virtuellen Bildinhalte angezeigt werden, die Realumgebung wahrnehmen und diese mit den virtuellen Bildinhalten überlagern kann. Alternativ kann die Anzeigevorrichtung jedoch auch eine Aufnahmevorrichtung aufweisen, die die Realumgebung aufnimmt, die Aufnahme um die jeweiligen virtuellen Bildinhalte ergänzt und das so kombinierte Bildsignal dem Nutzer auf einem Anzeigeelement zur Anzeige bringt.

Gemäß einer weiteren Variante des vorgeschlagenen Systems ist vorgesehen, dass das System einen Sensorträger zum Überflug über und/oder zur Durchfahrt durch die Realumgebung umfasst, welcher zumindest einen Sensor zur Erzeugung von die Realumgebung abbildenden Sensordaten aufweist. Mit einem derartigen Sensorträger können in besonders vorteilhafter Weise innerhalb kürzester Zeit Simulationsumgebungen erzeugt werden, wie sie beim Betrieb des beschriebenen Systems sowie des beschriebenen Verfahrens zum Einsatz kommen. Bezüglich des Sensorträgers und des vom Sensorträger umfassten Sensors zur Erzeugung von die Realumgebung abbildenden Sensordaten wird abermals auf die deutsche Patentanmeldung DE 10 2015 120 999.3 und deren in die vorliegenden Beschreibung vollumfänglich einbezogene Offenbarung verwiesen.

Weitere Vorteile und Einzelheiten des erfindungsgemäßen Verfahrens sowie des erfindungsgemäßen Systems werden nachfolgend unter Zuhilfenahme der beigefügten, schematischen Zeichnungen von Ausführungsbeispielen erläutert werden. Darin zeigen:
- Fig. 1: eine schematische Ansicht eines Sichtfeld eines Benutzers auf einen Ausschnitt der Realumgebung;
- Fig. 2: eine schematische Darstellung eines Sichtfelds eines Benutzers auf einen Ausschnitt der Realumgebung und einen mit der Realumgebung überlagerten virtuellen Bildinhalt gemäß einer ersten Ausführungsform;
- Fig. 3: eine schematische Darstellung eines Sichtfelds eines Benutzers auf einen Ausschnitt einer Realumgebung und einem mit der Realumgebung überlagerten virtuellen Bildinhalt gemäß einer zweiten Ausführungsform;
- Fig. 4: eine schematische Darstellung eines Ablaufs des erfindungsgemäßen Verfahrens in eine erste Ausführungsform;
- Fig. 5: eine schematische Darstellung eines erfindungsgemäßen Systems in einer ersten Ausführungsform.

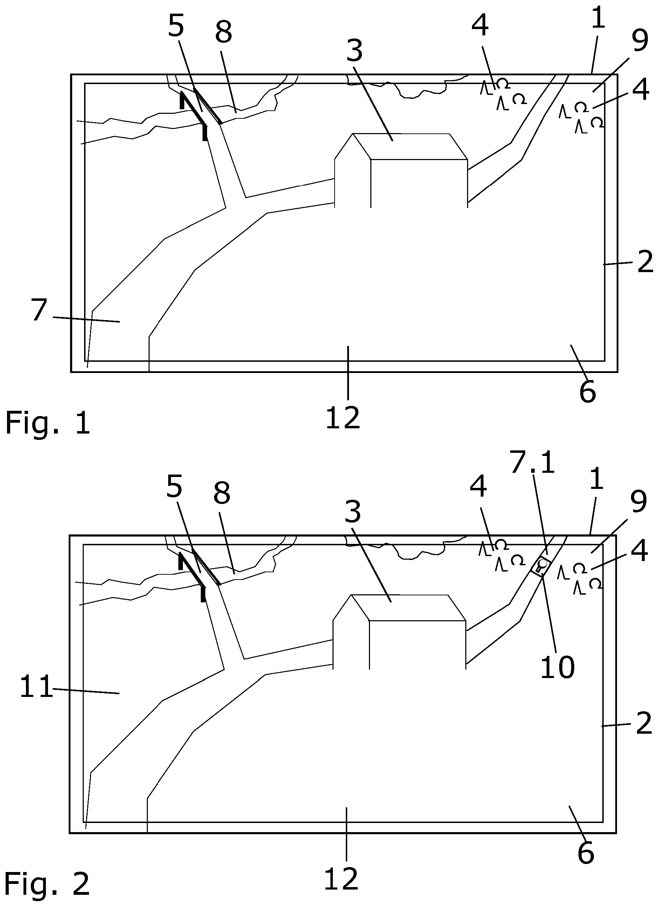

Die Fig. 1 zeigt ein Ausschnitt aus einer Realumgebung 1, wie sie sich dem Benutzer von einer bestimmten Position und unter einer bestimmten Blickrichtung darstellt. Dies bedeutet, dass der Benutzer von seiner Position und unter seiner Blickrichtung den Teil der Realumgebung 1 optisch wahrnehmen kann, der sich innerhalb des Sichtfelds 2 des Benutzers befindet. In der beispielhaften Darstellung der Fig. 1 sind in dem Ausschnitt der Realumgebung 1 reale Objekte in Form eines realen Gebäudes 3, realem Bewuchs 4 sowie einer realen Brücke 5 angeordnet. Diese realen Objekte 2 bis 5 befinden sich in einem Ausschnitt des realen Geländes 6. Das reale Gelände 6 kann dabei unterteilt werden in einen Ausschnitt eines realen Wegenetzes 7, einen Ausschnitt eines realen Flusslaufes 8 sowie eine reale erste Anhöhe 12 und eine der ersten Anhöhe 12 gegenüberliegende zweite Anhöhe 9.

Die besondere Herausforderung an das erfindungsgemäße Verfahren sowie das erfindungsgemäße System besteht darin, virtuelle Bildinhalte zu erzeugen und für den Benutzer auf einem Anzeigeelement einer Anzeigevorrichtung derart mit realen Bildinhalten der Realumgebung 1 oder Abbildungen der Realumgebung 1 zu überlagern, dass für den sich in der Realumgebung 1 befindlichen Benutzer ein Sinneseindruck ermöglicht wird, bei dem die virtuellen Bildinhalte, unabhängig ob sich diese in einem statischen oder dynamischen Zustand befinden, für den Benutzer insbesondere in Kombination mit den überlagerten realen Bildinhalten, einen realitätsnahen Eindruck erwirken. Dies bedeutet, dass es der besondere Wunsch des Verfahrens oder des Systems ist, die virtuellen Bildinhalte so zu erzeugen und mit den realen Bildinhalten überlagert anzuzeigen, dass für den Benutzer die virtuellen Bildinhalte so realitätsnah sind, dass sie nicht ohne Weiteres als virtuelle Bildinhalte identifiziert werden können. Dadurch wird ermöglicht ein Training oder eine Übung in einer Realumgebung 1 durchzuführen, ohne den besonders hohen Aufwand zu tätigen, der notwendig ist, wenn anstatt der virtuellen Bildinhalte entsprechende reale Objekte, beispielsweise Fahrzeuge bei der Übung oder dem Manöver zum Einsatz kommen.

Ein Beispiel einer Überlagerung von realen Bildinhalten, also einer Darstellung der Realumgebung 1 oder eine Abbildung der Realumgebung 1 und virtuellen Bildinhalten, ist in der Fig. 2 schematisiert dargestellt. Die realen Bildinhalte oder die Abbildung der Realumgebung 1 entspricht der der Fig. 1. Zusätzlich zu den realen Bildinhalten in Form der Abbildung der Realumgebung 1 umfasst die Darstellung der Fig. 2 jedoch auch einen virtuellen Bildinhalt 10 in Form eines Fahrzeugs, genauer gesagt, in Form eines Panzerfahrzeugs. Der virtuelle Bildinhalt 10 befindet sich an einer scheinbaren Position in der Realumgebung 1, nämlich auf einem Teil des Wegnetzes 7 im Bereich der zweiten Anhöhe 9. Um einen für den Benutzer realitätsnah anmutenden Betrieb einer Anzeigevorrichtung mit einem in Sichtfeld des Benutzers angeordneten Anzeigeelement zu ermöglichen, sind bei der Generierung und Anzeige des virtuellen Bildinhalts 10 verschiedene Kriterien zu berücksichtigen.

Erstens befindet sich der Benutzer selbst im Bereich einer Anhöhe 12 und blickt im oberen rechten Bereich seines Sichtfeldes 2 auf eine zweite Anhöhe 9, von der ein Wegabschnitt 7.1 als Teil des Wegnetzes 7 herabführt, weshalb der virtuelle Bildinhalt 10 einerseits in einer gewissen Draufsicht erzeugt und angezeigt werden soll und darüber hinaus aufgrund der Distanz zwischen der ersten Anhöhe 12 und der zweiten Anhöhe 9 in einer entsprechenden Größe und Skalierung erzeugt und angezeigt werden soll. Beides ist in der Darstellung der Fig. 2 dadurch veranschaulicht, dass der virtuelle Bildinhalt 10 in Form eines Panzerfahrzeuges die volle Breite des Wegabschnitts 7.1 einnimmt und darüber hinaus der Geschützturm und der Geschützlauf erkennbar ist. Ein weiteres Kriterium, was von dem erfindungsgemäßen Verfahren und dem erfindungsgemäßen System realisiert wird, ist, dass der virtuelle Bildinhalt 10 in Form eines Panzerfahrzeuges nicht zwischen den realen Objekten 4 in Form von Bewuchs der zweiten Anhöhe 9 oder gar auf den realen Objekten 4 der Realumgebung 1 angeordnet wird.

Zudem ist es besonders wünschenswert, wenn der virtuelle Bildinhalt 10 eine sich verändernde Position aufweist, wobei die Positionsänderung bevorzugt entlang des Wegenetzes 7 erfolgt, dass also das Panzerfahrzeug dem Wegenetz 7 folgt.

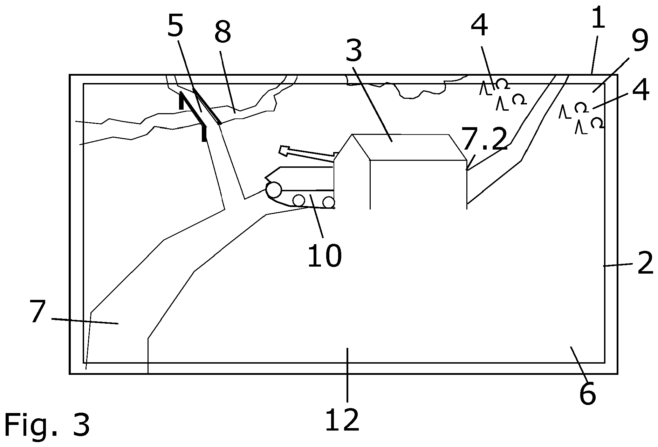

Eine weitere besonders wichtige Voraussetzung an die virtuellen Bildinhalte sowie für deren Erzeugung und Anzeige wird anhand der Fig. 3 nachfolgend beispielhaft erläutert.

Die Fig. 3 zeigt erneut reale Bildinhalte, die einer Abbildung der Realumgebung 1 der Fig. 1 entsprechen. Zusätzlich zu den realen Bildinhalten 11 wird ein virtueller Bildinhalt 10 mit den realen Bildinhalten 11 überlagert und so dem Benutzer zur Anzeige gebracht. Bei dem virtuellen Bildinhalt 10 der Fig. 3 soll es sich abermals um eine Abbildung eines virtuellen Fahrzeugs, insbesondere um die Abbildung eines virtuellen Panzerfahrzeuges handeln. Das virtuelle Objekt, welches zu dem virtuellen Bildinhalt 10 führt, soll jedoch an einer solchen Position in der Realumgebung angeordnet sein, dass ein Teil des virtuellen Objekts durch das reale Objekt 3 verdeckt wird und das virtuelle Objekt dementsprechend bei der Erzeugung und Anzeige des virtuellen Bildinhalts 10 angepasst und verändert, in diesem Fall anhand der Verdeckung durch das reale Objekt 3 zugeschnitten, werden muss.

Mit anderen Worten ausgedrückt bedeutet dies, dass der virtuelle Panzer oder das virtuelle Panzerfahrzeug, der die Grundlage des virtuellen Bildinhalts 10 darstellt, in der Situation der Fig. 3 sich auf einem Wegabschnitt 7.2 des Wegenetzes 7 befindet, der aus der Position und unter der Blickrichtung des Benutzers von der ersten Anhöhe 12 hinter dem realen Gebäude 3 verläuft. Folglich kann je nach der Positionierung des virtuellen Objekts 10 ein Teil des virtuellen Objekts von dem realen Objekt 3 verdeckt werden, was bei der Erzeugung und Anzeige der virtuellen Bildinhalte 10 entsprechend berücksichtigt werden soll, um eine realistische Darstellung der virtuellen Objekte anhand der virtuellen Bildinhalte 10 zu gewährleisten.

Eine weitere besonders wünschenswerte Leistung des erfindungsgemäßen System und des erfindungsgemäßen Verfahrens besteht darin, dass das virtuelle Objekt und die daraus abgeleiteten virtuellen Bildinhalte 10 bei einer Veränderung der scheinbaren Position des virtuellen Objekts in der Realumgebung 1 eine Veränderung der Position entlang des Wegenetzes 7 vorsehen und insbesondere ein Überqueren der Brücke 5 anstatt eines Überquerens des Flusslaufes 8 erfolgt, ohne dass dazu eine genaue bzw. im Vorfeld programmierte und festgelegte Veränderung der scheinbaren Position des virtuellen Objekts benötigt wird.

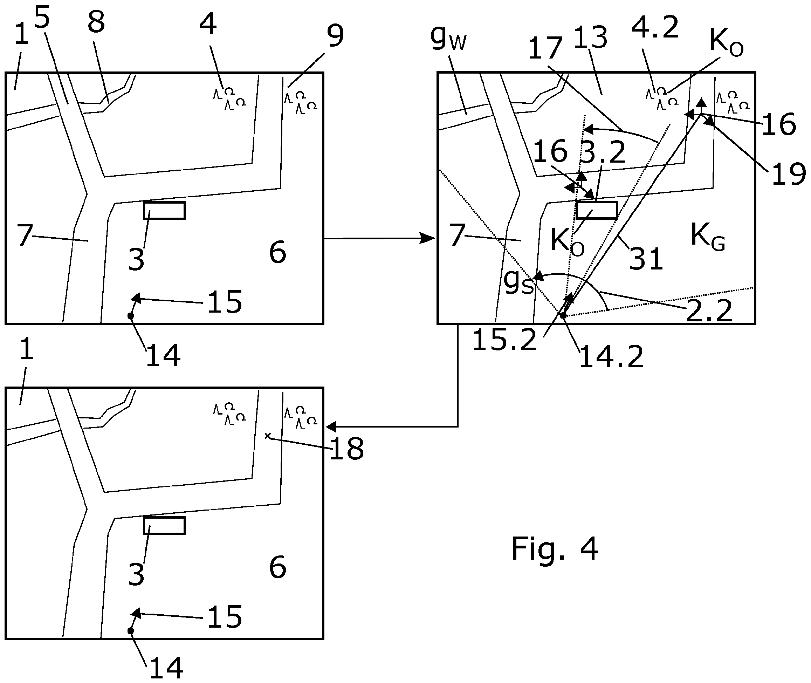

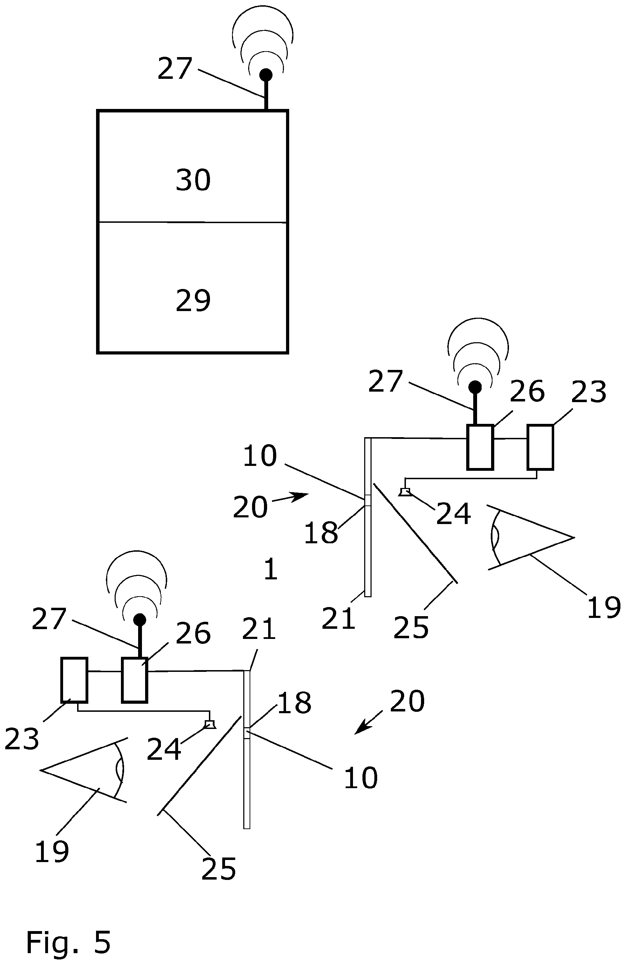

Die Realisierung der in den Fig. 1 bis 3 beschriebenen Anforderungen an das erfindungsgemäße Verfahren sowie das erfindungsgemäße System werden nachfolgend unter Zuhilfenahme der Fig. 4 und 5 beispielhaft veranschaulicht.

Die Fig. 4 umfasst in ihrer linken Hälfte zwei Ausschnitte der Realumgebung 1, die dem Ausschnitt der Realumgebung 1 der Fig. 1 entsprechen. Der Unterschied zur Fig. 1 besteht jedoch darin, dass der Ausschnitt der Realumgebung 1 in den Darstellungen der Fig. 4 aus Gründen der besseren Darstellbarkeit in einer Draufsicht erfolgen. In der rechten Hälfte der Fig. 4 ist ein Ausschnitt aus einer Simulationsumgebung 13 dargestellt. Die Simulationsumgebung 13 bildet die Realumgebung 1 georeferenziert und insbesondere geospezifisch ab. Dies bedeutet unter anderem dass die in der Realumgebung angeordneten Objekte 3 bis 5 sowie das Gelände 6 mit den unterschiedlichen Teilen des Geländes 7 bis 9 in der Simulationsumgebung 13 eine maßstabsgetreue und lagerichtige Entsprechung haben. Beispielsweise befindet sich in der Simulationsumgebung 13 ein realabbildendes Objekt 3.2 in Form eines realabbildenden Gebäudes, welches dem realen Gebäude 3 der Realumgebung 1 entspricht.

Das erfindungsgemäße Verfahren beginnt in der Regel damit, dass in der Realumgebung 1 die Position 14 und die Blickrichtung 15 des Benutzers des Verfahrens bestimmt wird. Dies kann beispielsweise durch eine Sensorik zur Nachverfolgung der Kopf- und/oder Augenbewegung des Benutzers sowie eine entsprechende Positionsbestimmungseinheit ermöglicht werden, wobei letztere ebenfalls eine geeignete Positionssensorik aufweisen kann. Die bestimmte Position 14 sowie die bestimmte Blickrichtung 15 wird in einem weiteren Verfahrensschritt in die virtuelle Position 14.2 und die virtuelle Blickrichtung 15.2 in der Simulationsumgebung 13 umgerechnet. Diese Bestimmung der virtuellen Position 14.2 und der virtuellen Blickrichtung 15.2 kann im einfachsten Falle, nämlich wenn die Realumgebung 1 und die Simulationsumgebung 13 über ein identisches Koordinatensystem miteinander verknüpft sind, lediglich in einer Übertragung der Position 14 und der Blickrichtung 15 bestehen.

In einem weiteren Verfahrensschritt des erfindungsgemäßen Verfahrens wird darüber hinaus eine Objektposition 16 eines virtuellen Objekts 19 in der Simulationsumgebung 13 bestimmt. Neben der Objektposition 16 kann auch eine Ausrichtung des virtuellen Objekts 19 an der Objektposition 16 bestimmt werden, was in der Darstellung der Fig. 4 durch das an der Objektposition 16 befindliche Koordinatenkreuz veranschaulicht wird.

Sowohl bei der Auswahl der Objektposition 16 als auch bei der Bestimmung der Ausrichtung des virtuellen Objekts 19 an der Objektposition 16 können dabei verschiedene Eigenschaften der Simulationsumgebung 13 besonders vorteilhaft genutzt werden. Einerseits kann durch eine Klassifizierung der Simulationsumgebung 13 sichergestellt werden, dass die Objektposition 16 so gewählt wird, dass sie einer möglichen und/oder wahrscheinlichen Objektposition eines realen Objekts in der Realumgebung 1 entspricht. Im vorliegenden Beispiel bedeutet dies, dass der Bereich der Simulationsumgebung 13, in der sich das real abbildende Objekt 3.2 befindet, von der Wahl als mögliche Objektposition 16 ausgeschlossen ist. Demnach könnte eine entsprechende Klassifizierung der Simulationsumgebung, die zumindest zwischen computergenerierten, das reale Gelände abbildenden Geländemodell 6.2 und reale Objekte abbildende, computergenerierte Objekte 3.2, 4.2 vorsieht, so ausgestaltet sein, dass in der Simulationsumgebung 13 bzw. in den der Simulationsumgebung 13 zugrunde liegenden Daten eine Klassifizierung in Gelände K_{G} und eine Klassifizierung in Objekte Ko vorgesehen ist.

Darüber hinaus kann eine Unterklassifizierung des Geländes der Simulationsumgebung 13 zu einer realistischen Platzierung und/oder Bewegung von virtuellen Objekten 19, also einer Veränderung der Objektposition 16 beitragen. Folglich kann beispielsweise vorgesehen sein, dass der Teil des computergenerierten, das reale Gelände abbildenden Teils der Simulationsumgebung 13 und deren Geländemodell, der den realen Flusslauf 8 abbildet, eine entsprechende Geländeklassifizierung gw in der Simulationsumgebung 13 und den der Simulationsumgebung zugrunde liegenden Daten zugeordnet ist. Gleichermaßen kann dem computergenerierten, das reale Gelände abbildenden Geländemodell im Bereich des realen Wegenetzes 7 eine Geländeklassifikation gs zugeordnet sein.

Auch wenn dies in der Darstellung der Simulationsumgebung 13 in der Abbildung der Fig. 4 nicht ohne Weiteres erkennbar ist, so ist bei dem erfindungsgemäßen Verfahren und für das erfindungsgemäße System vorgesehen, dass die Simulationsumgebung 13 eine zumindest 2,5-dimensionale Abbildung der Realumgebung 1 darstellt. Die Simulationsumgebung 13 der Fig. 4 kann beispielsweise aus der Zeichenebene der Fig. 4 heraus oder in diese hereinragende Höhenwerte umfassen, die ggf. einem Rasterpunkt eines Höhenraster jeweils einen Höhenwert zuordnen. Anhand dieser zumindest 2,5-dimensionalen Ausgestaltung der Simulationsumgebung 13 kann zusammen mit der virtuellen Position 14.2 und der virtuellen Blickrichtung 15.2 im Rahmen des Verfahrens ohne Weiteres festgestellt oder berechnet werden, welche Teile der Simulationsumgebung 13 sich im Sichtbereich 2 des Benutzers befinden und ob es darüber hinaus im Sichtfeld des Benutzers Teile der Simulationsumgebung 13 gibt, die durch das Gelände oder darin befindliche Objekte verdeckt sind. Im Beispiel der Fig. 4 wird folglich anhand der punktiert dargestellten Linien einerseits das Ausmaß des in die Simulationsumgebung 13 übertragene Sichtfeld 2.2 des Benutzers sowie der vom Benutzer nicht einsehbare Teil 17 der Simulationsumgebung 13 berechnet, der ausgehend von der virtuellen Position 14.2 und unter der Blickrichtung 15.2 von dem real abbildenden Objekt 3.2 verdeckt wird.

Diese Analyse von aus der virtuellen Position 14.2 und unter der virtuellen Blickrichtung 15.2 sichtbare und nicht sichtbare oder verdeckte Teile der Simulationsumgebung 13 ermöglicht es wiederum, bei der Berechnung eines virtuellen Bildinhalts, diesen als den aus der virtuellen Position 14.2 und unter der virtuellen Blickrichtung 15.2 sichtbaren Teils eines in der Simulationsumgebung 13 an einer Objektposition 16 befindlichen virtuellen Objekts 19 zu bestimmen.

Gleichermaßen fließt die Ausrichtung des virtuellen Objektes 19 an der virtuellen Position 16 in die Bestimmung des jeweils sichtbaren Teils des virtuellen Objekts 19 mit ein.

Die Ausgestaltung der Simulationsumgebung 13 als zumindest 2,5-dimensionale georeferenzierte Abbildung der Realumgebung ermöglicht darüber hinaus, insbesondere zusammen mit einem physikalischen Modell, dass die Ausrichtung der virtuellen Objekte 19 an der jeweiligen Objektposition 16 realistisch ist. So kann beispielsweise vorgesehen sein, dass die Ausrichtung des virtuellen Objekts 16 an der Objektposition 16 so erfolgt, dass zumindest eine Unterseite oder ein Bereich einer Unterseite des virtuellen Objekts 16 Kontakt zu dem Gelände, also Kontakt zu dem computergenerierten, das reale Gelände abbildenden Geländemodell der Simulationsumgebung 13 aufweisen.

Im Rahmen des Verfahrens wird nach der Bestimmung der virtuellen Position 14.2 sowie der virtuellen Blickrichtung 15.2, der Objektposition 16 und ggf. der Objektausrichtung und der Bestimmung oder Berechnung des sichtbaren Teils des virtuellen Objekts 19 anhand von Ausrichtung und Relativanordnung zur virtuellen Position 14.2 und virtuellen Blickrichtung 15.2 unter ggf. notwendiger Berücksichtigung der Verdeckung durch andere Teile der Simulationsumgebung 13 sowie möglicherweise einer Skalierung des virtuellen Objekts 19 anhand des Abstands 31 zwischen der Objektposition 16 und der virtuellen Position 14.2, ebenfalls unter Berücksichtigung der virtuellen Positionen 14.2 der virtuellen Blickrichtung 15.2 der Objektposition 16 und ggf. dem Ausmaß des virtuellen Sichtfeldes 2.2 eine Einblendungsposition des virtuellen Bildinhalts auf dem Anzeigeelement berechnet.

Im Anschluss daran folgt eine Anzeige von zumindest einem wie vorangehend beschrieben abgeleiteten virtuellen Bildinhalts 10 auf einem Anzeigeelement unter der jeweiligen Berücksichtigung der berechneten Einblendungsposition. In der unteren Darstellung der linken Seite der Fig. 1 ist dementsprechend ein Ausschnitt der Realumgebung 1 dargestellt, bei der an einer Einblendungsposition 18 ein virtueller Bildinhalt 10 dargestellt wird. Die untere linke Seite der Fig. 4 soll jedoch nicht so verstanden werden, dass die Einblendungsposition 18 eines virtuellen Bildinhaltes 10 einer genauen und statischen Position in der Realumgebung 1 zuzuordnen ist.

Vielmehr variiert die Einblendungsposition 18 des virtuellen Bildinhalts 10 auch und besonders in Abhängigkeit der Position 14 und Blickrichtung 15des Benutzers in der Realumgebung 1. Dementsprechend ist die Einblendungsposition 18 des virtuellen Bildinhalts 10 auch als Einblendungsposition 18 auf einem Anzeigeelement definiert. Folglich ist die in der Fig. 4 dargestellte Einblendungsposition 18 so zu verstehen, dass bei einem statischen oder zumindest hinsichtlich seiner Objektposition 16 statischen virtuellen Objekt die Anzeigeposition 18 auf dem Anzeigeelement gerade so dynamisch angepasst wird, dass auch bei einer Veränderung der Position 14 und/oder der Blickrichtung 15 des Benutzers in der Realumgebung 1 der virtuelle Bildinhalt 10 nach wie vor so mit dem realen Bildinhalten der Realumgebung 1 überlagert angezeigt wird, dass für den Benutzer der Eindruck entsteht, das virtuelle Objekt 19 befände sich statisch eben an einer scheinbaren Objektposition in der Realumgebung 1, die der Einblendungsposition 18 in der Fig. 4 entspricht.

Fig. 5 zeigt einen beispielhaften Aufbau eines erfindungsgemäßen Systems. Das System der Fig. 5 soll sich besonders dazu eignen, dass unterschiedliche Benutzer in der Realumgebung 1, insbesondere im gleichen Teil der Realumgebung zusammen geschult oder trainiert werden können und dabei in Abhängigkeit der jeweiligen Position und Blickrichtung soweit möglich virtuelle Bildinhalte zu realen Bildinhalten überlagert angezeigt bekommen, die auf identischen virtuelle Objekte in der Realumgebung zurückzuführen sind. Mit anderen Worten ausgedrückt bedeutet dies, dass einer Mehrzahl von Benutzern ermöglicht werden soll, in der Realumgebung das gleiche Trainingsszenario, also ein gemeinsames Trainings- oder Übungsszenario zu durchlaufen.

Dazu wird jeder Benutzer 22 mit einer entsprechenden Anzeigevorrichtung 20 ausgestattet, die jeweils ein Anzeigeelement 21 aufweist, welches sich in einem Sichtfeld 2 des Benutzers 19 befindet. Die Anzeigeelemente 21 sollen im Beispiel der Fig. 5 als zumindest abschnittsweise durchsichtige Anzeigeelemente ausgestaltet sein, bei denen eine Überlagerung von auf dem Anzeigeelement 21 angezeigten oder dargestellten virtuellen Bildinhalten 10 mit realen Bildinhalten dadurch hervorgerufen wird, dass der Benutzer 22 zumindest in den Teilen des Anzeigeelements 21, in denen keine virtuellen Bildinhalte 10 dargestellt oder angezeigt werden, eine Durchsicht durch das Anzeigeelement 21 erfährt und die dahinter liegende Realumgebung 1 wahrnehmen kann. Dementsprechend spricht der Fachmann bei der Anzeigevorrichtung 20 des Beispiels der Fig. 5 auch von einer Durchsicht-Anzeige-Vorrichtung (see-through system). Andere Anzeigevorrichtungen 20 eignen sich jedoch ebenfalls für das System der Fig. 5.

Die jedem Benutzer 22 zugeordneten Systemkomponenten umfassen darüber hinaus je eine Positions- und Blickrichtungsbestimmungseinheit 23. Im Beispiel der Fig. 5 wird einerseits mit einer der Positions- und Blickrichtungsbestimmungseinheit 23 zugeordneten Aufnahmevorrichtung 24 über einen halbdurchlässigen Spiegel 25 die Blickrichtung des Benutzers oder zumindest die Augenposition des Benutzers 19 aufgenommen und an die Positions- und Blickrichtungsbestimmungseinheit 23 weitergeleitet. Darüber hinaus soll im Beispiel der Fig. 5 über eine entsprechende Sensorik der Positions- und Blickrichtungsbestimmungseinheit 23 die Position des Benutzers 19 in der Realumgebung 1 und darüber hinaus Kopfbewegungen des Benutzers 19 ermittelt werden. Aus den so erhobenen Daten kann die Position des Benutzers in der Realumgebung sowie die Blickrichtung des Benutzers 19 in der Realumgebung festgestellt werden. Die Positionsbestimmungseinheit und die Blickrichtungsbestimmungseinheit können jedoch auch separat voneinander realisiert sein.

Außerdem verfügt das System über jeweils eine dem Benutzer 22 zugeordnete Recheneinheit 26, die sowohl mit der Positions- und Blickrichtungsbestimmungseinheit 23 verbunden ist als auch über eine benutzerseitige bi-direktionale Übermittlungseinrichtung 27 verfügt. Über die bi-direktionale Übermittlungseinrichtung 27 können die dem jeweiligen Benutzer 22 zugeordneten Systemkomponenten Daten und Informationen an eine zentrale Systemeinheit 28 senden und von dieser empfangen, wobei die zentrale Systemeinheit 28 ebenfalls über eine bi-direktionale Übermittlungseinrichtung 27 verfügt. Im Fall der Fig. 5 sollen beispielsweise die Daten hinsichtlich der Position und der Blickrichtung der Benutzer 22 an die zentrale Systemeinheit 28 übermittelt werden. Die zentrale Systemeinheit 28 umfasst ihrerseits eine Speichereinheit 29, in der eine computergenerierte, die Realumgebung georeferenziert abbildende Simulationsumgebung sowie eine Objektdatenbank virtueller Objekte gespeichert sind. Darüber hinaus umfasst die zentrale Systemeinheit 28 eine Recheneinheit 30, die mit der Speichereinheit 29 verbunden ist und zur Platzierung von virtuellen Objekten der Objektdatenbank an einer Objektposition in der Simulationsumgebung, zur Ableitung einer virtuellen Position und einer virtuellen Blickrichtung des Benutzers 22 in der Simulationsumgebung aus den übermittelten Daten hinsichtlich der realen Position und realen Blickrichtung des Benutzers 22 in der Realumgebung sowie zur Berechnung eines virtuellen Bildinhalts als von der virtuellen Position und unter der virtuellen Blickrichtung sichtbaren Teils des virtuellen Objekts in der Simulationsumgebung eingerichtet ist.

Ferner ist die Recheneinheit 30 zur Berechnung einer Einblendungsposition des virtuellen Bildinhalts auf dem Anzeigeelement 21 anhand der Objektposition 16 und der virtuellen Position und virtuellen Blickrichtung eingerichtet. Der berechnete virtuelle Bildinhalt sowie die berechnete Einblendungsposition können von der Recheneinheit 30 bzw. von der zentralen Systemeinheit 28 über die bi-direktionalen Übertragungseinrichtungen 27 zurück an den Benutzer 22 oder die benutzerseitigen Systemkomponenten gesendet werden. Dort kann mittels der den Benutzern zugeordneten Recheneinheiten 26 eine ggf. noch notwendige Weiterverarbeitung oder Aufarbeitung der von der Recheneinheit 30 oder der zentralen Systemeinheit 28 empfangenen Daten stattfinden, um schließlich über die Verbindung zwischen der Recheneinheit 26 und dem Anzeigeelement 21 einen oder die virtuellen Bildinhalte 10 auf einer Einblendungsposition 18 des Anzeigeelements 21 zur Anzeige zu bringen und damit den virtuellen Bildinhalt 10 mit realen Bildinhalten zu überlagern.

Das System kann jedoch auch derart ausgestaltet sein, dass beispielsweise die Systemkomponenten der zentralen Systemeinheit 28 für jeden Benutzer 22 zur Verfügung gestellt und diesem räumlich zugeordnet werden. In diesem Fall können die im Beispiel der Fig. 5 als drahtlose bi-direktionale Übermittlungseinrichtungen 27 ausgeführten Komponenten des Systems als entsprechend schnellere kabelgebundene bi-direktionale Übermittlungseinrichtungen 27 ausgestaltet werden. In solch einem Fall oder in solch einer Ausführung des Systems wären dann, um ggf. ein Training mit mehreren Benutzern gleichzeitig zu ermöglichen, noch entsprechende Systemkomponenten vorzusehen, die eine Verbindung der jeweiligen Benutzer oder zumindest eine Synchronisation der virtuellen Objekte, der Objektposition und ggf. der Ausrichtungen der virtuellen Objekte erlauben.

### Bezugszeichen:

- Realumgebung: 1
- Sichtfeld: 2
- Reales Gebäude: 3
- Realer Bewuchs: 4
- Reale Brücke: 5
- Reales Gelände: 6
- Reales Wegnetz: 7
- Erster Wegabschnitt: 7.1
- Zweiter Wegabschnitt: 7.2
- Realer Flusslauf: 8
- Zweite Anhöhe: 9
- Virtueller Bildinhalt: 10
- Reale Bildinhalte: 11
- erste Anhöhe: 12
- Simulationsumgebung: 13
- Reale Position: 14
- Virtuelle Position: 14.2
- Reale Blickrichtung: 15
- Virtuelle Blickrichtung: 15.2
- Objektposition: 16
- Nicht einsehbarer Teil: 17
- Einblendungsposition: 18
- Virtuelles Objekt: 19
- Anzeigevorrichtung: 20
- Anzeigeelement: 21
- Benutzer: 22
- Positions- und Blickrichtungsbestimmungseinheit: 23
- Aufnahmevorrichtung: 24
- Halbdurchlässiger Spiegel: 25
- Benutzerseitige Recheneinheit: 26
- Übermittlungseinrichtung: 27
- Zentrale Systemeinheit: 28
- Speichereinheit: 29
- Recheneinheit: 30
- Abstand: 31

## Patentansprüche

1. Verfahren zum Betrieb einer Anzeigevorrichtung (20) mit einem im Sichtfeld (2) des Benutzers (22) angeordneten Anzeigeelement (21) zur Anzeige von virtuellen Bildinhalten (10), die realen Bildinhalten (11) überlagert angezeigt werden, umfassend die Verfahrensschritte:
- Bestimmung einer Position (14) und einer Blickrichtung (15) des Benutzers (22) in einer Realumgebung (1);
- Platzieren zumindest eines virtuellen Objekts (19) an einer Objektposition (16) einer die Realumgebung (1) georeferenziert, insbesondere geospezifisch, abbildenden, computergenerierten Simulationsumgebung (13), wobei die Simulationsumgebung (13) durch die Auswertung von bei einem Überflug über und/oder einer Durchfahrt durch die Realumgebung gewonnenen Sensordaten, insbesondere Bildaufnahmen, erzeugt wird, wobei die Simulationsumgebung (13) als unsichtbare virtuelle Kulisse deckungsgleich mit der Realumgebung (1) in Übereinstimmung gebracht wird, um aus einem virtuellen Objekt (19) einen realistischen virtuellen Bildschirmeinhalt zu erzeugen und anzuzeigen; - Bestimmung einer virtuellen Position (14.2) und Blickrichtung (15.2) durch Übertragen der bestimmten Position (14) und Blickrichtung (15) in die Simulationsumgebung (13);
- Berechnung eines virtuellen Bildinhalts (10) als von der virtuellen Position (14.2) und unter der virtuellen Blickrichtung (15.2) sichtbaren Teil des virtuellen Objekts (19) in der Simulationsumgebung (13);
- Berechnung einer Einblendungsposition (18) des virtuellen Bildinhalts (10) auf dem Anzeigeelement (21) anhand der Objektposition (16) und der virtuellen Position (14.2) und Blickrichtung (15.2);
- Anzeige von zumindest einem virtuellen Bildinhalt (10) auf dem Anzeigeelement (21).

2. Verfahren nach Anspruch 1,
**dadurch gekennzeichnet,**
**dass** anhand einer Relativanordnung zwischen der Objektposition (16) und der virtuellen Position (14.2) in der Simulationsumgebung (13) eine Größen-Skalierung des virtuellen Bildinhalts (10) bestimmt wird.

3. Verfahren nach Anspruch 1 oder 2,
**dadurch gekennzeichnet,**
**dass** die Objektposition (16) durch eine Klassifizierung der Simulationsumgebung (13) beschränkt wird, die zumindest eine Unterscheidung zwischen einem computergenerierten das reale Gelände abbildenden Geländemodell und im realen Gelände (6) befindliche reale Objekte (3, 4, 5) abbildenden computergenerierten Objekten (3.2, 4.2) vorsieht.

4. Verfahren nach Anspruch 3,
**dadurch gekennzeichnet,**
**dass** zur Anzeige von einem bewegten virtuellen Bildinhalt (10) das Verfahren, insbesondere mit zumindest einer sich ändernden Objektposition (16), fortlaufend wiederholt wird, wobei die Änderung der Objektposition (16) zumindest durch eine Klassifizierung der Simulationsumgebung (13) beschränkt wird, die zumindest eine Unterscheidung zwischen einem computergenerierten das reale Gelände (6) abbildenden Geländemodell und reale Objekte (3, 4, 5) abbildenden computergenerierten Objekten (3.2, 4.2) vorsieht.

5. Verfahren nach einem der Ansprüche 1 bis 4,
**dadurch gekennzeichnet,**
**dass** zur Anzeige von einem bewegten virtuellen Bildinhalt (10) das Verfahren, insbesondere mit zumindest einer sich ändernden Objektposition (16) fortlaufend wiederholt wird, wobei die Änderung der Objektposition (16) durch eine Geländeklassifizierung der Simulationsumgebung (13) gesteuert wird, wobei die Geländeklassifizierung zumindest eine Unterscheidung zwischen unterschiedlichen Geländetypen und/oder Geländezuständen (g_{F}, gs) eines computergenerierten das reale Gelände (6) abbildenden Geländemodells vorsieht.

6. Verfahren nach einem der Ansprüche 1 bis 5,
**dadurch gekennzeichnet,**
**dass** virtuelle Bildinhalte (10) als zweidimensionale Projektionen von dreidimensionalen virtuellen Objekten (19) erzeugt werden, wobei die Projektion zumindest anhand einer Ausrichtung des Objekts (19) in der Simulationsumgebung (13) erzeugt wird.

7. Verfahren nach einem der Ansprüche 1 bis 6,
**dadurch gekennzeichnet,**
**dass** zur Anzeige von einem bewegten virtuellen Bildinhalt (10) das Verfahren, insbesondere mit zumindest einer sich ändernden Ausrichtung des virtuellen Objekts (19) fortlaufend wiederholt wird, wobei die zweidimensionale Projektion in Abhängigkeit der Veränderung der Relativanordnung zwischen der virtuellen Position (14.2), der Blickrichtung (15.2) und der Ausrichtung des Objekts (19) in der Simulationsumgebung (13) erzeugt wird.

8. System zur Anzeige von realen Bildinhalten (11) einer Realumgebung (1) überlagerten virtuellen Bildinhalten (10), mit zumindest einer Anzeigevorrichtung (20) mit einem im Sichtfeld (2) des Benutzers (22) angeordneten Anzeigeelement (21) zur Anzeige von virtuellen Bildinhalten (10), die realen Bildinhalten (11) überlagert angezeigt werden,
**gekennzeichnet durch**
zumindest eine Speichereinheit (29), in der eine computergenerierte, die Realumgebung (1) georeferenziert abbildende Simulationsumgebung (13) sowie eine Objektdatenbank virtueller Objekte (19) gespeichert sind, wobei die Simulationsumgebung (13) als unsichtbare virtuelle Kulisse deckungsgleich mit der Realumgebung (1) in Übereinstimmung gebracht wird, um aus einem virtuellen Objekt (19) einen realistischen virtuellen Bildschirmeinhalt zu erzeugen und anzuzeigen, eine Positions- und Blickrichtungsbestimmungseinheit (23), die zur Bestimmung der Position und Blickrichtung des Benutzers (22) in der Realumgebung (1) eingerichtet ist,
eine erste Übermittlungseinrichtung (27) zur Übermittlung der Position und Blickrichtung an eine Recheneinheit (30),
wobei die Recheneinheit (30) mit der zumindest einen Speichereinheit (29) verbunden ist und zur Platzierung von virtuellen Objekten (19) der Objektdatenbank an einer Objektposition (16) in der Simulationsumgebung (13), zur Ableitung einer virtuellen Position (14.2) und Blickrichtung (15.2) in der Simulationsumgebung (13) aus der übermittelten Position (14) und Blickrichtung (15), zur Berechnung eines virtuellen Bildinhalts (10) als von der virtuellen Position (14.2) und unter der virtuellen Blickrichtung (15.2) sichtbaren Teil des virtuellen Objekts (19) in der Simulationsumgebung (13) sowie zur Berechnung einer Einblendungsposition (18) des virtuellen Bildinhalts (10) auf dem Anzeigeelement (21) anhand der Objektposition (16) und der virtuellen Position (14.2) und Blickrichtung (15.2) eingerichtet ist,
sowie eine mit der Recheneinheit (30) verbundene zweite Übermittlungseinrichtung (27), die zum Senden des virtuellen Bildinhalts (10) und der Einblendungsposition (18) an die Anzeigevorrichtung (20) eingerichtet ist, wobei ein Sensorträger vorgesehen ist, der zum Überflug über und/oder zur Durchfahrt durch die Realumgebung (1) eingerichtet ist und zumindest einen Sensor zur Erzeugung von die Realumgebung (1) abbildenden Sensordaten aufweist.

9. System nach Anspruch 8,
**dadurch gekennzeichnet,**
**dass** die Recheneinheit einen Bewegungssimulator aufweist, der eine sich ändernde Objektposition (16) virtueller Objekte (19) in der Simulationsumgebung berechnet.

10. System nach Anspruch 8 oder 9,
**dadurch gekennzeichnet,**
**dass** die Speichereinheit (29) eine Klassifizierung der Simulationsumgebung (13) aufweist, die zumindest eine Unterscheidung zwischen einem computergenerierten das reale Gelände (6) abbildenden Geländemodells und im realen Gelände (6) befindliche reale Objekte (3, 4, 5) abbildenden computergenerierten Objekten (3.2, 4.2) vorsieht.

11. System nach einem der Ansprüche 8 bis 10,
**dadurch gekennzeichnet,**
**dass** die Speichereinheit (29) eine Geländeklassifizierung der Simulationsumgebung (13) aufweist, wobei die Geländeklassifizierung zumindest eine Unterscheidung zwischen unterschiedlichen Geländetypen und/oder Geländezuständen (g_{F}, gs) eines computergenerierten das reale Gelände (6) abbildenden Geländemodells vorsieht.

12. System nach einem der Ansprüche 8 bis 11,
**dadurch gekennzeichnet,**
**dass** die Recheneinheit (30) als eine einem Benutzer (22) zugeordnete, insbesondere tragbare, persönliche Recheneinheit (26) ausgestaltet ist, wobei
die Recheneinheit (30), datentechnisch mit zumindest einer Recheneinheit, insbesondere einer persönlichen Recheneinheit (26) verbunden ist.

13. System nach einem der Ansprüche 8 bis 11,
**dadurch gekennzeichnet,**
**dass** die Speichereinheit (29) und/oder die Recheneinheit (30) als zentrale Speichereinheit (29) und/oder als zentrale Recheneinheit (30) ausgebildet ist/sind.

14. System nach einem der Ansprüche 9 bis 13,
**gekennzeichnet durch**
eine Mehrzahl von Anzeigevorrichtungen (20), eine entsprechende Mehrzahl von Positions- und Blickrichtungsbestimmungseinheiten (23) und Übermittlungseinrichtungen (27), wobei die Anzeigevorrichtung (20) als kopfbefestigbare Anzeigevorrichtung, insbesondere als Durchsicht-Anzeigevorrichtung, ausgestaltet ist.

## Claims

1. Method for operating a display device (20) with a display element (21) arranged in the field of view (2) of the user (22) for displaying virtual image contents (10) which are displayed superimposed on real image contents (11), comprising the method steps:
- Determining a position (14) and a viewing direction (15) of the user (22) in a real environment (1);
- placing at least one virtual object (19) at an object position (16) of a computer-generated simulation environment (13) which maps the real environment (1) in a georeferenced manner, in particular in a geospecific manner, the simulation environment (13) being generated by evaluating sensor data obtained during a flight over and/or a passage through the real environment, in particular image recordings, the simulation environment (13) being brought into congruence as an invisible virtual backdrop with the real environment (1) in order to generate and display a realistic virtual screen content from a virtual object (19);
- determining a virtual position (14. 2) and viewing direction (15.2) by transferring the determined position (14) and viewing direction (15) to the simulation environment (13);
- calculating a virtual image content (10) as a part of the virtual object (19) visible from the virtual position (14.2) and under the virtual viewing direction (15.2) in the simulation environment (13);
- calculating an insertion position (18) of the virtual image content (10) on the display element (21) based on the object position (16) and the virtual position (14.2) and viewing direction (15.2);
- displaying at least one virtual image content (10) on the display element (21).

2. Method according to claim 1, **characterized in that** a relative arrangement between the object position (16) and the virtual position (14.2) in the simulation environment (13) is used to determine a size scaling of the virtual image content (10).

3. Method according to claim 1 or 2,
**characterized in**
**that** the object position (16) is restricted by a classification of the simulation environment (13) which provides at least a distinction between a computer-generated terrain model representing the real terrain and computer-generated objects (3.2, 4.2) representing real objects (3, 4, 5) located in the real terrain (6).

4. Method according to claim 3,
**characterized in**
**that**, in order to display a moving virtual image content (10), the method is continuously repeated, in particular with at least one changing object position (16), the change in the object position (16) being limited at least by a classification of the simulation environment (13) which provides at least one distinction between a computer-generated terrain model representing the real terrain (6) and computer-generated objects (3.2, 4.2) representing real objects (3, 4, 5).

5. Method according to one of the claims 1 to 4,
**characterized in that**, in order to display a moving virtual image content (10), the method is continuously repeated, in particular with at least one changing object position (16), the change in the object position (16) being controlled by a terrain classification of the simulation environment (13), the terrain classification providing at least a differentiation between different terrain types and/or terrain states (g_{F}, gₛ) of a computer-generated terrain model representing the real terrain (6).

6. Method according to one of the claims 1 to 5,
**characterized in**
**that** virtual image contents (10) are generated as two-dimensional projections of three-dimensional virtual objects (19), the projection being generated at least on the basis of an orientation of the object (19) in the simulation environment (13).

7. Method according to any one of claims 1 to 6,
**characterized in**
**that**, in order to display a moving virtual image content (10), the method is continuously repeated, in particular with at least one changing orientation of the virtual object (19), the two-dimensional projection being generated as a function of the change in the relative arrangement between the virtual position (14.2), the viewing direction (15.2) and the orientation of the object (19) in the simulation environment (13).

8. System for displaying virtual image contents (10) superimposed on real image contents (11) of a real environment (1), having at least one display device (20) with a display element (21) arranged in the field of view (2) of the user (22) for displaying virtual image contents (10) which are displayed superimposed on real image contents (11),
**characterized by**
at least one memory unit (29) in which a computer-generated simulation environment (13) georeferencing the real environment (1) and an object database of virtual objects (19) are stored, the simulation environment (13) being brought into congruence with the real environment (1) as an invisible virtual backdrop in order to generate and display a realistic virtual screen content from a virtual object (19),
a position and viewing direction determining unit (23) adapted to determine the position and viewing direction of the user (22) in the real environment (1),
a first transmission means (27) for transmitting the position and viewing direction to a computing unit (30),
wherein the computing unit (30) is connected to the at least one memory unit (29) and is arranged for placing virtual objects (19) of the object database at an object position (16) in the simulation environment (13), for deriving a virtual position (14.2) and viewing direction (15.2) in the simulation environment (13) from the transmitted position (14) and viewing direction (15), for calculating a virtual image content (10) as being dependent on the virtual position (14. 2) and under the virtual viewing direction (15.2) of the virtual object (19) in the simulation environment (13) and for calculating an insertion position (18) of the virtual image content (10) on the display element (21) on the basis of the object position (16) and the virtual position (14.2) and viewing direction (15.2),
and a second transmission device (27) which is connected to the computing unit (30) and is set up to transmit the virtual image content (10) and the superimposition position (18) to the display device (20), a sensor carrier being provided which is set up to fly over and/or pass through the real environment (1) and has at least one sensor for generating sensor data which depict the real environment (1).

9. System according to claim 8,
**characterized in**
**that** the computing unit has a motion simulator which calculates a changing object position (16) of virtual objects (19) in the simulation environment.

10. System according to claim 8 or 9, **characterized in that** the memory unit (29) has a classification of the simulation environment (13) which provides at least a distinction between a computer-generated terrain model representing the real terrain (6) and computer-generated objects (3.2, 4.2) representing real objects (3, 4, 5) located in the real terrain (6).

11. system according to any one of claims 8 to 10,
**characterized in**
**that** the memory unit (29) has a terrain classification of the simulation environment (13), the terrain classification providing at least a distinction between different terrain types and/or terrain states (g_{F}, gs) of a computer-generated terrain model representing the real terrain (6).

12. A system according to any one of claims 8 to 11,
**characterized in**
**that** the computing unit (30) is designed as a personal computing unit (26) assigned to a user (22), in particular a portable computing unit (26), wherein the computing unit (30) is connected in terms of data technology to at least one computing unit, in particular a personal computing unit (26).

13. System according to one of claims 8 to 11,
**characterized in**
**that** the memory unit (29) and/or the computing unit (30) is/are designed as a central memory unit (29) and/or as a central computing unit (30).

14. System according to any one of claims 9 to 13,
**characterized by**
a plurality of display devices (20), a corresponding plurality of position and viewing direction determination units (23) and transmission devices (27), wherein
the display device (20) is designed as a head-mountable display device, in particular as a see-through display device.

## Revendications

1. Procédé permettant de faire fonctionner un dispositif d'affichage (20) pourvu d'un élément d'affichage (21) disposé dans le champ de vision (2) de l'utilisateur (22) pour afficher des contenus d'image virtuels (10) qui sont affichés en superposition avec des contenus d'image réels (11), comprenant les étapes de procédé consistant à :
- déterminer une position (14) et une direction du regard (15) de l'utilisateur (22) dans un environnement réel (1) ;
- placer au moins un objet virtuel (19) dans une position d'objet (16) d'un environnement de simulation (13) généré par ordinateur et représentant l'environnement réel (1) de manière géoréférencée, en particulier de manière spécifique à la géographie, dans lequel l'environnement de simulation (13) est généré par l'évaluation de données de capteur, en particulier de prises de vue, obtenues lors d'un survol du et/ou d'un passage par l'environnement réel, dans lequel l'environnement de simulation (13) est mis en correspondance de manière coïncidente avec l'environnement réel (1) comme une coulisse virtuelle invisible afin de générer à partir d'un objet virtuel (19) un contenu d'écran virtuel réaliste et de l'afficher ;
- déterminer une position virtuelle (14.2) et une direction du regard virtuelle (15.2) en transférant la position déterminée (14) et la direction du regard déterminée (15) dans l'environnement de simulation (13) ;
- calculer un contenu d'image virtuel (10) comme une partie de l'objet virtuel (19) visible à partir de la position virtuelle (14.2) et dans la direction du regard virtuelle (15.2) dans l'environnement de simulation (13) ;
- calculer une position d'incrustation (18) du contenu d'image virtuel (10) sur l'élément d'affichage (21) à l'aide de la position d'objet (16) et de la position virtuelle (14.2) et de la direction du regard virtuelle (15.2) ;
- afficher au moins un contenu d'image virtuel (10) sur l'élément d'affichage (21).

2. Procédé selon la revendication 1, **caractérisé en ce qu'**une mise à l'échelle du contenu d'image virtuel (10) est déterminée à l'aide d'une disposition relative entre la position d'objet (16) et la position virtuelle (14.2) dans l'environnement de simulation (13).

3. Procédé selon la revendication 1 ou 2, **caractérisé en ce que** la position d'objet (16) est limitée par une classification de l'environnement de simulation (13) qui prévoit au moins une distinction entre un modèle de terrain généré par ordinateur et représentant le terrain réel et des objets générés par ordinateur (3.2, 4.2) représentant des objets réels (3, 4, 5) se trouvant sur le terrain réel (6).

4. Procédé selon la revendication 3, **caractérisé en ce que** pour l'affichage d'un contenu d'image virtuel animé (10), le procédé est répété en continu, en particulier avec au moins une position d'objet variable (16), dans lequel la variation de la position d'objet (16) est limitée au moins par une classification de l'environnement de simulation (13) qui prévoit au moins une distinction entre un modèle de terrain généré par ordinateur et représentant le terrain réel (6) et des objets générés par ordinateur (3.2, 4.2) représentant des objets réels (3, 4, 5).

5. Procédé selon l'une quelconque des revendications 1 à 4, **caractérisé en ce que** pour l'affichage d'un contenu d'image virtuel animé (10), le procédé est répété en continu, en particulier avec au moins une position d'objet variable (16), dans lequel la variation de la position d'objet (16) est commandée par une classification de terrain de l'environnement de simulation (13), dans lequel la classification de terrain prévoit au moins une distinction entre différents types de terrain et/ou états de terrain (g_{F}, gₛ) d'un modèle de terrain généré par ordinateur et représentant le terrain réel (6).

6. Procédé selon l'une quelconque des revendications 1 à 5, **caractérisé en ce que** des contenus d'image virtuels (10) sont générés sous forme de projections bidimensionnelles d'objet virtuels tridimensionnels (19), dans lequel la projection est générée au moins à l'aide d'un alignement de l'objet (19) dans l'environnement de simulation (13).

7. Procédé selon l'une quelconque des revendications 1 à 6, **caractérisé en ce que** pour l'affichage d'un contenu d'image virtuel animé (10), le procédé est répété en continu, en particulier avec au moins un alignement variable de l'objet virtuel (19), dans lequel la projection bidimensionnelle est générée en fonction de la variation de la disposition relative entre la position virtuelle (14.2), la direction du regard virtuelle (15.2) et l'alignement de l'objet (19) dans l'environnement de simulation (13).

8. Système permettant d'afficher des contenus d'image virtuels (10) en superposition avec des contenus réels (11) d'un environnement réel (1), comprenant au moins un dispositif d'affichage (20) pourvu d'un élément d'affichage (21) disposé dans le champ de vision (2) de l'utilisateur (22) pour afficher des contenus d'image virtuels (10) qui sont affichés en superposition avec des contenus d'image réels (11),
**caractérisé par**
au moins une unité de mémoire (29) qui stocke un environnement de simulation (13) généré par ordinateur et représentant l'environnement réel (1) de manière géoréférencée, ainsi qu'une base de données d'objets avec des objets virtuels (19), dans lequel l'environnement de simulation (13) est mis en correspondance de manière coïncidente avec l'environnement réel (1) comme une coulisse virtuelle invisible afin de générer à partir d'un objet virtuel (19) un contenu d'écran virtuel réaliste et de l'afficher,
une unité de détermination de position et de direction du regard (23) qui est conçue pour déterminer la position et la direction du regard de l'utilisateur (22) dans l'environnement réel (1),
un premier moyen de transmission (27) pour transmettre la position et la direction du regard à une unité de calcul (30),
dans lequel l'unité de calcul (30) est reliée à ladite au moins une unité de mémoire (29), et est conçue pour placer des objets virtuels (19) de la base de données d'objets dans une position d'objet (16) dans l'environnement de simulation (13), pour dériver une position virtuelle (14.2) et une direction du regard virtuelle (15.2) dans l'environnement de simulation (13) à partir de la position transmise (14) et de la direction du regard transmise (15), pour calculer un contenu d'image virtuel (10) comme une partie de l'objet virtuel (19) visible à partir de la position virtuelle (14.2) et dans la direction du regard virtuelle (15.2) dans l'environnement de simulation (13), ainsi que pour calculer une position d'incrustation (18) du contenu d'image virtuel (10) sur l'élément d'affichage (21) à l'aide de la position d'objet (16) et de la position virtuelle (14.2) et de la direction du regard virtuelle (15.2),
ainsi qu'un deuxième moyen de transmission (27) relié à l'unité de calcul (30) et qui est conçu pour envoyer le contenu d'image virtuel (10) et la position d'incrustation (18) au dispositif d'affichage (20), dans lequel un support de capteur est prévu qui est conçu pour le survol du et/ou le passage par l'environnement réel (1) et présente au moins un capteur pour générer des données de capteur représentant l'environnement réel (1).

9. Système selon la revendication 8, **caractérisé en ce que** l'unité de calcul présente un simulateur de mouvement qui calcule une position d'objet variable (16) d'objets virtuels (19) dans l'environnement de simulation.

10. Système selon la revendication 8 ou 9, **caractérisé en ce que** l'unité de mémoire (29) présente une classification de l'environnement de simulation (13) qui prévoit au moins une distinction entre un modèle de terrain généré par ordinateur et représentant le terrain réel (6) et des objets générés par ordinateur (3.2, 4.2) représentant des objets réels (3, 4, 5) se trouvant sur le terrain réel (6).

11. Système selon l'une quelconque des revendications 8 à 10, **caractérisé en ce que** l'unité de mémoire (29) présente une classification de terrain de l'environnement de simulation (13), dans lequel la classification de terrain prévoit au moins une distinction entre différents types de terrain et/ou états de terrain (g_{F}, gₛ) d'un modèle de terrain généré par ordinateur et représentant le terrain réel (6).

12. Système selon l'une quelconque des revendications 8 à 11, **caractérisé en ce que** l'unité de calcul (30) est configurée comme une unité de calcul personnelle (26), en particulier portable, associée à un utilisateur (22), dans lequel
l'unité de calcul (30) est reliée de manière informatisée à au moins une unité de calcul, en particulier à une unité de calcul personnelle (26).

13. Système selon l'une quelconque des revendications 8 à 11, **caractérisé en ce que** l'unité de mémoire (29) et/ou l'unité de calcul (30) est/sont réalisée(s) comme une unité de mémoire centrale (29) et/ou comme une unité de calcul centrale (30).

14. Système selon l'une quelconque des revendications 9 à 13, **caractérisé par** une pluralité de dispositifs d'affichage (20), une pluralité correspondante d'unités de détermination de position et de direction du regard (23) et de moyens de transmission (27), dans lequel
le dispositif d'affichage (20) est configuré comme un dispositif d'affichage pouvant être fixé à la tête, en particulier comme un dispositif d'affichage par transparence.
